# EUROPEAN PATENT APPLICATION

(11) **EP 4 303 277 A1**
(43) Date of publication of application: **10.01.2024**
(21) Application number: 22763199.1
(22) Date of filing: 28.02.2022
(51) Int. Cl.: C09D 5/16, C09D 133/14, C09D 7/40, C09D 7/63

(54) **ANTIFOULING COATING COMPOSITION**

(30) Priority: 05.03.2021 JP 2021035686
(71) Applicant: Nitto Kasei Co., Ltd., Osaka-shi Osaka 533-0031 (JP)
(72) Inventor: OKA, Nagato, Osaka-shi, Osaka 533-0031 (JP); MATSUKI, Takashi, Osaka-shi, Osaka 533-0031 (JP); KITAMURA, Hitoshi, Osaka-shi, Osaka 533-0031 (JP); WAKU, Hidenori, Osaka-shi, Osaka 533-0031 (JP); YASUI, Takuya, Osaka-shi, Osaka 533-0031 (JP); ITO, Motomichi, Osaka-shi, Osaka 533-0031 (JP)
(74) Representative: Gulde & Partner
(86) International application number: PCT/JP2022/008313
(87) International publication number: WO 2022/186143

(57) **Abstract**

The present invention provides an antifouling coating composition having high storage stability, capable of maintaining a stable coating film dissolution rate in seawater over a long period of time, and capable of maintaining stable antifouling performance without causing coating film defects such as cracks.

According to the present invention, there is provided an antifouling coating composition comprising a copolymer A, an ester compound C, and an antifouling agent D, wherein the copolymer A is a copolymer of a monomer (a) represented by general formula (1) and an ethylenically unsaturated monomer (b) other than the monomer (a), the monomer (a) comprises a compound represented by general formula (1) in which n is 2 or more, and the ester compound C comprises at least one ester compound represented by chemical formulas (3) to (8).

## Description

### TECHNICAL FIELD

The present invention relates to an antifouling coating composition.

### BACKGROUND ART

Aquatic fouling organisms such as barnacles, tubeworms, common mussels, *Bugula neritinα,* sea squirts, green laver, sea lettuce, and slimes adhere to ships (especially, on the bottom of ships), fishing tools such as fishing nets and fishing net accessories, and underwater structures such as power plant aqueducts, thereby causing problems such as impaired functionality and appearance of the ships and the like.

In order to prevent such problems, there are known techniques in which an antifouling coating composition is applied onto a ship or the like to form an antifouling coating film such that an antifouling agent is gradually released from the antifouling coating film, which allows antifouling performance to be exhibited over a long period of time (Patent Literatures 1 to 4).

However, the antifouling coating films comprising (meth)acrylic acid alkoxycarbonylmethyl ester group-containing polymer disclosed in Patent Literatures 1 to 4 are difficult to exhibit antifouling property over a long period of time due to its extremely low coating film dissolubility. In order to solve these problems, there has been proposed a technique for dissolving and allowing the coating film to exhibit antifouling performance over a long period of time (Patent Literature 5).

### CITATION LIST

### PATENT LITERATURE

[Patent Literature 1] JP-B-S63-61989
[Patent Literature 2] JP-A-2003-119420
[Patent Literature 3] JP-A-2003-119419
[Patent Literature 4] JP-A-2002-3776
[Patent Literature 5] WO2020/045211

### SUMMARY OF INVENTION

### TECHNICAL PROBLEM

Although the antifouling coating film comprising the antifouling coating composition disclosed in Patent Literature 5 has improved coating film dissolubility and the like, when a long period of time has elapsed after immersion in seawater, the coating film dissolution may become excessively large or coating film defects such as cracks may occur, so there is a need for further improvement. Further, when the period from the production of the coating material to the coating is prolonged, the original performance of the coating composition may not be exhibited, so there is a need for a coating composition having high storage stability.

The present invention has been made in view of such circumstances, and provides an antifouling coating composition having high storage stability, capable of maintaining a stable coating film dissolution rate in seawater over a long period of time, and capable of maintaining stable antifouling performance without causing coating film defects such as cracks.

### SOLUTION TO PROBLEM

According to the present invention, there is provided an antifouling coating composition comprising a copolymer A, an ester compound C, and an antifouling agent D, wherein the copolymer A is a copolymer of a monomer (a) represented by general formula (1) and an ethylenically unsaturated monomer (b) other than the monomer (a), the monomer (a) comprises a compound represented by general formula (1) in which n is 2 or more, and the ester compound C comprises at least one ester compound represented by chemical formulas (3) to (8).

As a result of diligent research to solve the above problems, the present inventors have found that the composition comprising the copolymer A, an ester compound C, and the antifouling agent D can solve the above problems and have completed the present invention.

### DESCRIPTION OF EMBODIMENTS

The present invention will be described in detail below.

### 1. Antifouling Coating Composition

An antifouling coating composition of the present invention contains a copolymer A, an ester compound C, and an antifouling agent D.

### 1-1. Copolymer A

The copolymer A is a copolymer of a monomer (a) and an ethylenically unsaturated monomer (b) other than the monomer (a), and contains monomer units derived from the monomer (a) and the monomer (b). The content of the monomer (a) with respect to the total of the monomer (a) and the monomer (b) is preferably 10 to 90% by mass, and still more preferably 20 to 70% by mass. Specifically, the content thereof is, for example, 10, 15, 20, 25, 30, 35, 40, 45, 50, 55, 60, 65, 70, 75, 80, 85, or 90% by mass, and may be within the range between any two numerical values exemplified here. In this case, the coating film dissolubility is particularly good.

### 1-1-1. Monomer (a)

The monomer (a) is represented by general formula (1).

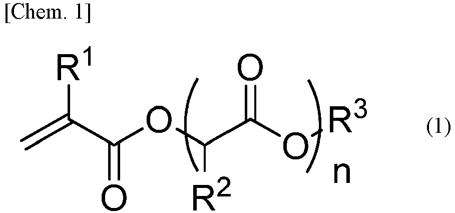

In the formula, R¹ represents hydrogen or a methyl group, R² represents hydrogen, a methyl group, or a phenyl group, R³ is an alkyl group having 1 to 8 carbon atoms optionally substituted with an alkoxy group having 1 to 8 carbon atoms or a phenyl group, or represents a phenyl group, and n represents an integer of 1 to 10.

R² is preferably hydrogen or a methyl group.

The number of carbon atoms in the alkoxy group or alkyl group of R³ is, for example, 1, 2, 3, 4, 5, 6, 7, or 8, and may be within the range between any two numerical values exemplified here. R³ is, for example, a methyl group, an ethyl group, a n-propyl group, an isopropyl group, a n-butyl group, a t-butyl group, a 2-ethylhexyl group, a cyclohexyl group, a benzyl group, a phenyl group, a 2-methoxyethyl group, a 4-methoxybutyl group, a vinyl group, or an allyl group, and is preferably a methyl group, an ethyl group, an isopropyl group, or a n-butyl group.

n represents an integer of 1 to 10, and n is, for example, 1, 2, 3, 4, 5, 6, 7, 8, 9, or 10, and may be within the range between any two numerical values exemplified here.

The monomer (a) contains a compound represented by general formula (1) in which n is 2 or more. When the compound in which n is 2 or more is contained as the monomer (a), the coating film dissolubility is increased. The monomer (a) may only be constituted by a compound in which n is 2 or more, or may be a mixture of a compound in which n is 1 and a compound in which n is 2 or more.

The monomer (a) is preferably constituted by a monomer (a1) and a monomer (a2). The content of the monomer (a1) in the monomer (a) is preferably 50 to 80% by mass, more preferably 55 to 75% by mass, and particularly preferably 60 to 70% by mass. The monomer (a1) has the property of increasing the coating film strength and decreasing the coating film dissolubility as compared with the monomer (a2). Therefore, when the content of the monomer (a1) is too small, the strength of the coating film tends to decrease, and the coating film surface condition may deteriorate after a long period of time. On the other hand, when the content of the monomer (a1) is too large, the coating film dissolubility decreases, and the antifouling performance may deteriorate.

### <Monomer (a1)>

The monomer (a1) is a compound represented by general formula (1) in which n is 1.

Examples of the monomer (a1) include methoxycarbonylmethyl (meth)acrylate, ethoxycarbonylmethyl (meth)acrylate, isopropoxycarbonylmethyl (meth)acrylate, n-propoxycarbonylmethyl (meth)acrylate, n-butoxycarbonylmethyl (meth)acrylate, n-butoxycarbonylmethyl (meth)acrylate, t-butoxycarbonylmethyl (meth)acrylate, 2-ethylhexyloxycarbonylmethyl (meth)acrylate, cyclohexyloxycarbonylmethyl (meth)acrylate, benzyloxycarbonylmethyl (meth)acrylate, phenoxycarbonylmethyl (meth)acrylate, 2-methoxyethoxycarbonylmethyl (meth)acrylate, 4-methoxybutoxycarbonylmethyl (meth)acrylate, allyloxycarbonylmethyl (meth)acrylate, vinyloxycarbonylmethyl (meth)acrylate, 1-(methoxycarbonyl)ethyl (meth)acrylate, 1-(ethoxycarbonyl)ethyl (meth)acrylate, 1-(n-propoxycarbonyl)ethyl (meth)acrylate, 1-(isopropoxycarbonyl)ethyl (meth)acrylate, 1-(n-butoxycarbonyl)ethyl (meth)acrylate, 1-(t-butoxycarbonyl)ethyl (meth)acrylate,α-(methoxycarbonyl)benzyl (meth)acrylate, and α-(ethoxycarbonyl)benzyl (meth)acrylate, and preferred examples thereof include methoxycarbonylmethyl (meth)acrylate, ethoxycarbonylmethyl (meth)acrylate, isopropoxycarbonylmethyl (meth)acrylate, n-butoxycarbonylmethyl (meth)acrylate, 1-(methoxycarbonyl)ethyl (meth)acrylate, and 1-(ethoxycarbonyl)ethyl (meth)acrylate.

### <Monomer (a2)>

The monomer (a2) is a compound represented by general formula (1) in which n is 2 or more. n in general formula (1) is preferably 2 to 6 from the viewpoint of long-term antifouling property.

The monomer (a2) preferably contains both a compound in which n is 2 and a compound in which n is 3 or more. Specifically, the mass ratio (n(2)/n(2 to 10)) in terms of solid content is preferably, for example, 0.4 to 0.8, and more preferably 0.5 to 0.7. In this case, stable dissolution of the coating film tends to continue. Specifically, the value is, for example, 0.40, 0.45, 0.50, 0.55, 0.60, 0.65, 0.70, 0.75, or 0.80, and may be within the range between any two numerical values exemplified here.

Examples of the monomer (a2) include di(oxycarbonylmethyl) methyl (meth)acrylate, di(oxycarbonylmethyl) ethyl (meth)acrylate, di(oxycarbonylmethyl) isopropyl (meth)acrylate, di(oxycarbonylmethyl) n-propyl (meth)acrylate, di(oxycarbonylmethyl) n-butyl (meth)acrylate, di(oxycarbonylmethyl) t-butyl (meth)acrylate, di(oxycarbonylmethyl) 2-ethylhexyl (meth)acrylate, di(oxycarbonylmethyl) cyclohexyl (meth)acrylate, di(oxycarbonylmethyl) benzyl (meth)acrylate, di(oxycarbonylmethyl) phenyl (meth)acrylate, di(oxycarbonylmethyl) 2-methoxyethyl (meth)acrylate, di(oxycarbonylmethyl) 4-methoxybutyl (meth)acrylate, di(oxycarbonylmethyl) allyl (meth)acrylate, di(oxycarbonylmethyl) vinyl (meth)acrylate, di[1-(oxypolycarbonyl)ethyl] methyl (meth)acrylate, di[1-(oxypolycarbonyl)ethyl] ethyl (meth)acrylate, di[1-(oxypolycarbonyl)ethyl] n-propyl (meth)acrylate, di[1-(oxypolycarbonyl)ethyl] isopropyl (meth)acrylate, di[1-(oxypolycarbonyl)ethyl] n-butyl (meth)acrylate, di[1-(oxypolycarbonyl)ethyl] t-butyl (meth)acrylate, di[α-(oxycarbonyl)benzyl] methyl (meth)acrylate, and di[α-(oxycarbonyl)benzyl] ethyl (meth)acrylate, preferred examples thereof include di(oxycarbonylmethyl) methyl (meth)acrylate, di(oxycarbonylmethyl) ethyl (meth)acrylate, di(oxycarbonylmethyl) isopropyl (meth)acrylate, di(oxycarbonylmethyl) n-propyl (meth)acrylate, di(oxycarbonylmethyl) n-butyl (meth)acrylate, di[1-(oxypolycarbonylethyl)] methyl (meth)acrylate, di[1-(oxypolycarbonylethyl)] ethyl (meth)acrylate, poly(oxycarbonylmethyl) methyl (meth)acrylate, poly(oxycarbonylmethyl) ethyl (meth)acrylate, poly(oxycarbonylmethyl) isopropyl (meth)acrylate, poly(oxycarbonylmethyl) n-propyl (meth)acrylate, poly(oxycarbonylmethyl) n-butyl (meth)acrylate, poly(oxycarbonylmethyl) t-butyl (meth)acrylate, poly(oxycarbonylmethyl) 2-ethylhexyl (meth)acrylate, poly(oxycarbonylmethyl) cyclohexyl (meth)acrylate, poly(oxycarbonylmethyl) benzyl (meth)acrylate, poly(oxycarbonylmethyl) phenyl (meth)acrylate, poly(oxycarbonylmethyl) 2-methoxyethyl (meth)acrylate, poly(oxycarbonylmethyl) 4-methoxybutyl (meth)acrylate, poly(oxycarbonylmethyl) allyl (meth)acrylate, poly(oxycarbonylmethyl) vinyl (meth)acrylate, poly[1-(oxypolycarbonyl)ethyl] methyl (meth)acrylate, poly[1-(oxypolycarbonyl)ethyl] ethyl (meth)acrylate, poly[1-(oxypolycarbonyl)ethyl] n-propyl (meth)acrylate, poly[1-(oxypolycarbonyl)ethyl] isopropyl (meth)acrylate, poly[1-(oxypolycarbonyl)ethyl] n-butyl (meth)acrylate, poly[1-(oxypolycarbonyl)ethyl] t-butyl (meth)acrylate, poly[α-(oxycarbonyl)benzyl] methyl (meth)acrylate, and poly[α-(oxycarbonyl)benzyl] ethyl (meth)acrylate, preferred examples thereof include poly(oxycarbonylmethyl) methyl (meth)acrylate, poly(oxycarbonylmethyl) ethyl (meth)acrylate, poly(oxycarbonylmethyl) isopropyl (meth)acrylate, poly(oxycarbonylmethyl) n-propyl (meth)acrylate, poly(oxycarbonylmethyl) n-butyl (meth)acrylate, poly[1-(oxypolycarbonylethyl)] methyl (meth)acrylate, and poly[1-(oxypolycarbonylethyl)] ethyl (meth)acrylate.

### 1-1-2. Monomer (b)

The monomer (b) is an ethylenically unsaturated monomer other than the monomer (a). The monomer (b) can be classified into a monomer (b1) and a monomer (b2), and the monomer (b) used in the polymerization of the copolymer A contains one or both of the monomer (b1) and the monomer (b2).

### <Monomer (b1)>

The monomer (b1) is represented by general formula (2).

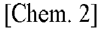

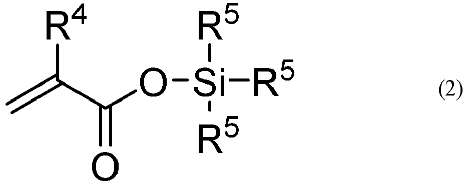

In the formula, R⁴ is hydrogen or a methyl group, and three R⁵ are the same as or different from each other and each represent a branched alkyl group having 3 to 8 carbon atoms or a phenyl group.

The number of carbon atoms in the branched alkyl group is, for example, 3, 4, 5, 6, 7, or 8, and may be within the range between any two numerical values exemplified here. Examples of the branched alkyl group include an isopropyl group, an isopropenyl group, an isobutyl group, a s-butyl group, a t-butyl group, a 1-ethylpropyl group, a 1-methylbutyl group, a 1-methylpentyl group, a 1,1-dimethylpropyl group, a 1,1-dimethylbutyl group, a hexyl group, a cyclohexyl group, a 1,1-dimethylpentyl group, a 1-methylhexyl group, a 1,1-dimethylhexyl group, a 1-methylheptyl group, a 2-methylbutyl group, a 2-ethylbutyl group, a 2,2-dimethylpropyl group, a cyclohexylmethyl group, a 2-ethylhexyl group, a 2-propylpentyl group, and a 3-methylpentyl group. Preferred as R⁵ are the same as or different from each other and are an isopropyl group, an isopropenyl group, a s-butyl group, a t-butyl group, a phenyl group, and a 2-ethylhexyl group, and particularly preferred are an isopropyl group and a 2-ethylhexyl group.

Examples of the monomer (b1) include (meth)acrylic acid silyl esters such as triisopropylsilyl (meth)acrylate, triisobutylsilyl (meth)acrylate, tri-s-butylsilyl (meth)acrylate, triisopentylsilyl (meth)acrylate, triphenylsilyl (meth)acrylate, diisopropylphenylsilyl (meth)acrylate, diisopropylisobutylsilyl (meth)acrylate, diisopropyl s-butylsilyl (meth)acrylate, diisopropylisopentylsilyl (meth)acrylate, isopropyl diisobutylsilyl (meth)acrylate, isopropyl di-s-butylsilyl (meth)acrylate, t-butyl diisobutylsilyl (meth)acrylate, t-butyl diisopentylsilyl (meth)acrylate, t-butyl diphenylsilyl (meth)acrylate, diisopropylhexylsilyl (meth)acrylate, diisopropylcyclohexylsilyl (meth)acrylate, tricyclohexylsilyl (meth)acrylate, tri-1,1-dimethylpentylsilyl (meth)acrylate, tri-2,2-dimethylpropylsilyl (meth)acrylate, tricyclohexylmethylsilyl (meth)acrylate, diisopropylcyclohexylmethylsilyl (meth)acrylate, tri-2-ethylhexylsilyl (meth)acrylate, and tri-2-propylpentylsilyl (meth)acrylate. These monomers (b1) may be used singly, or two or more thereof may be used in combination.

### <Monomer (b2)>

The monomer (b2) is obtained by removing the monomer (b1) from the monomer (b). In other words, the monomer (b2) is a monomer not represented by any of general formulas (1) and (2). Examples of the monomer (b2) include (meth)acrylic acid esters, vinyl compounds, aromatic compounds and dialkyl ester compounds of dibasic acids, which are not represented by any of general formulas (1) and (2). As used herein, (meth)acrylic acid esters mean acrylic acid esters or methacrylic acid esters.

Examples of (meth)acrylic acid esters not represented by any of general formulas (1) and (2) include (meth)acrylic acid esters, such as methyl (meth)acrylate, ethyl (meth)acrylate, butyl (meth)acrylate, isobutyl (meth)acrylate, t-butyl (meth)acrylate, 2-ethylhexyl (meth)acrylate, lauryl (meth)acrylate, 2-methoxyethyl (meth)acrylate, 2-methoxypropyl (meth)acrylate, 4-methoxybutyl (meth)acrylate, benzyl (meth)acrylate, phenyl (meth)acrylate, 2-ethoxyethyl (meth)acrylate, propylene glycol monomethyl (meth)acrylate, 2-hydroxyethyl (meth)acrylate, 2-hydroxypropyl (meth)acrylate, glycidyl (meth)acrylate, furfuryl (meth)acrylate, tetrahydrofurfuryl (meth)acrylate, dimethylaminoethyl (meth)acrylate, diethylaminoethyl (meth)acrylate, 2-[2-(2-hydroxyethoxy)ethoxy]ethoxy]ethyl methacrylate, mono(2-(meth)acryloyloxyethyl) succinate, N-(3-dimethylaminopropyl) (meth)acrylamide, 2-hydroxyethyl (meth)acrylate, 2-[2-(2-methoxyethoxy)ethoxy]ethyl (meth)acrylate, and N,N'-dimethyl (meth)acrylamide.

Examples of the vinyl compounds include vinyl compounds having a functional group, such as vinyl chloride, vinylidene chloride, acrylonitrile, methacrylonitrile, vinyl acetate, vinyl benzoate, vinyl butyrate, butyl vinyl ether, lauryl vinyl ether, and N-vinylpyrrolidone.

Examples of the aromatic compounds include styrene, vinyltoluene, and α-methylstyrene.

Examples of the dialkyl ester compounds of dibasic acids include dimethyl maleate, dibutyl maleate, and dimethyl fumarate.

In the copolymer A, these monomers (b) may be used singly, or two or more thereof may be used in combination. From the viewpoint of coating film dissolubility and coating film property, the monomer (b) preferably contains a (meth)acrylic acid ester of the monomer (b1) or the monomer (b2). From the viewpoint of crack resistance, the monomer (b) preferably contains a (meth)acrylic acid ester of the monomer (b2), and more preferably contains methyl (meth)acrylate, butyl (meth)acrylate, isobutyl (meth)acrylate, t-butyl (meth)acrylate, 2-ethylhexyl (meth)acrylate, 2-methoxyethyl (meth)acrylate, 2-ethoxyethyl (meth)acrylate, 2-hydroxyethyl (meth)acrylate, glycidyl (meth)acrylate, furfuryl (meth)acrylate, tetrahydrofurfuryl (meth)acrylate, or the like. From the viewpoint of coating film dissolubility, the monomer (b) preferably contains the monomer (b1), and more preferably contains triisopropylsilyl (meth)acrylate, t-butyldiphenylsilyl (meth)acrylate, tri-2-ethylhexylsilyl (meth)acrylate, or the like.

### 1-1-3. Physical Properties and Production Method of Copolymer A

The weight-average molecular weight (Mw) of the copolymer A is preferably 5000 to 300,000. When the molecular weight is less than 5,000, the coating film formed of the antifouling coating material becomes fragile and easily peels off or cracks, and when the molecular weight exceeds 300,000, the viscosity of the polymer solution increases and handling becomes difficult. Specifically, the Mw is, for example, 5,000, 10,000, 20,000, 30,000, 40,000, 50,000, 60,000, 70,000, 80,000, 90,000, 100,000, 200,000, or 300,000, and may be within the range between any two numerical values exemplified here.

Examples of the method for measuring Mw include gel permeation chromatography (GPC method).

The copolymer A may be a random copolymer, an alternating copolymer, a periodic copolymer, or a block copolymer of the monomer (a1), the monomer (a2), and the monomer (b).

The copolymer A may be obtained, for example, by polymerizing the monomer (a1), the monomer (a2), and the monomer (b) in the presence of a polymerization initiator.

Examples of the polymerization initiator include azo compounds such as 2,2'-azobisisobutyronitrile, 2,2'-azobis(2-methylbutyronitrile), 2,2'-azobis(2,4-dimethylvaleronitrile), dimethyl-2,2'-azobisisobutyrate, dimethyl-2,2'-azobisisobutyrate, and 2,2'-azobis(N-butyl-2-methylpropionamide); peroxides such as benzoyl peroxide, di-tert-butyl peroxide, tert-butyl peroxybenzoate, tert-butyl peroxyisopropyl carbonate, t-butyl peroxy-2-ethylhexanoate, t-hexylperoxy-2-ethylhexanoate, di-t-hexyl peroxide, t-butylperoxy-2-ethylhexyl monocarbonate, di-t-butyl peroxide, 1,1,3,3-tetramethylbutylperoxyneodecanoate, t-amylperoxyneodecanoate, t-hexylperoxypivalate, t-amylperoxypivalate, and 1,1,3,3-tetramethylbutylperoxy-2-ethylhexanoate. These polymerization initiators may be used singly, or two or more thereof may be used in combination. Particularly preferred as the polymerization initiator are 2,2'-azobisisobutyronitrile, 2,2'-azobis(2-methylbutyronitrile), 2,2'-azobis(2,4-dimethylvaleronitrile), dimethyl 2,2'-azobisisobutyrate, and 1,1,3,3-tetramethylbutylperoxy-2-ethylhexanoate. The amount of the polymerization initiator used may be set as appropriate to adjust the molecular weight of the copolymer A. A chain transfer agent may also be used to adjust the molecular weight of the resulting polymer. Examples of the chain transfer agent include mercaptans such as n-dodecylmercaptan; thioglycolic acid esters such as octyl thioglycolate; and α-methylstyrene dimer and terpinolene.

Examples of the polymerization method include solution polymerization, bulk polymerization, emulsion polymerization, suspension polymerization, and non-aqueous dispersion polymerization. Among these, solution polymerization or non-aqueous dispersion polymerization is particularly preferred in that the copolymer A simply and accurately can be obtained therethrough.

In the polymerization reaction, an organic solvent may be used as necessary. Examples of the organic solvent include, but are not limited to, aromatic hydrocarbon solvents such as xylene and toluene; aliphatic hydrocarbon solvents; ester solvents such as ethyl acetate, butyl acetate, isobutyl acetate, methoxy propyl acetate, and propylene glycol 1-monomethyl ether 2-acetate; alcohol solvents such as isopropyl alcohol, butyl alcohol, and propylene glycol monomethyl ether; ether solvents such as dioxane, diethyl ether, and dibutyl ether; and ketone solvents such as methyl ethyl ketone and methyl isobutyl ketone.

Among these, preferred are butyl acetate, isobutyl acetate, butyl alcohol, propylene glycol monomethyl ether, propylene glycol 1-monomethyl ether 2-acetate, toluene, and xylene. These solvents may be used singly, or two or more thereof may be used in combination.

The reaction temperature in the polymerization reaction may be set as appropriate according to the type of the polymerization initiator and the like, and is usually 50 to 160°C, preferably 60 to 150°C.

The polymerization reaction is preferably carried out under an inert gas atmosphere such as nitrogen gas or argon gas.

### 1-2. Ester compound C

The ester compound C of the present invention contains at least one ester compound (3) to (8) represented by chemical formulas (3) to (8). As used herein, "ester compound" means carboxylic acid esters formed by a carboxylic acid and an alcohol, and the forementioned carboxylic acid includes hydroxycarboxylic acids such as lactic acid and citric acid, and O-acetylhydroxycarboxylic acids thereof. The ester compound C is preferably a compound other than highly volatile organic compounds (VVOC) and volatile organic compounds (VOC) defined by the World Health Organization (WHO). Specifically, the ester compound C preferably remains as a non-volatile component when the volatile component content of the coating composition is measured in accordance with ASTM D2369-07.

### <Ester Compound (3)>

The ester compound (3) has a structure represented by chemical formula (3). The ester compound (3) is, for example, an aliphatic ester or an aromatic ester, such as an ester compound in which a monocarboxylic acid and a monoalcohol are bonded via ester bond by dehydration condensation. When the ester compound (3) is an aliphatic ester, one or both of R⁷ and R⁸ preferably contain at least one of a branched structure, a cyclic structure, or a heteroatom. When the ester compound (3) is an aromatic ester, one or both of R⁷ and R⁸ may have an aromatic ring, and when R⁷ contains an aromatic ring, the aromatic ring is preferably directly bonded to the carbon atom of the carbonyl group. 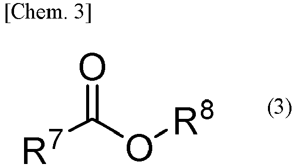 wherein R⁷ and R⁸ are each a hydrocarbon group having 1 to 25 carbon atoms optionally containing a heteroatom, where the hydrocarbon group is aliphatic or aromatic, linear or branched, or have a cyclic structure,

The number of carbon atoms in the hydrocarbon groups of R⁷ and R⁸ is preferably 2 to 20, specifically, for example, 1, 2, 3, 4, 5, 6, 7, 8, 9, 10, 11, 12, 13, 14, 15, 16, 17, 18, 19, 20, 21, 22, 23, 24, or 25, and may be within the range between any two numerical values exemplified here. The total number of carbon atoms of R⁷ and R⁸ is preferably 6 or more. Examples of the heteroatom of X and R⁷ to R⁸ include oxygen atom, sulfur atom, and nitrogen atom, among which a structure containing oxygen atom is preferred.

Specific examples of the ester compound (3) include aliphatic esters such as decyl decanoate, geranyl acetate, octyl stearate, cetyl stearate, octyl epoxystearate, 3,7-dimethyl-6-octen-1-ol acetate, terpinyl acetate, 4-tert-butylcyclohexyl acetate, menthyl acetate, isobornyl acetate, isobornyl ethylate, isobornyl stearate, methyl dihydrojasmonate, isopropyl myristate, isopropyl palmitate, 2-ethylhexyl stearate, cyclohexyl hexanoate, cyclohexyl cyclohexanecarboxylate, ethyl hexylacetoacetate, butyl ricinoleate, methyl acetylricinoleate, isopentyl lactate, menthyl lactate, hexadecyl lactate, 3-hydroxy-2,2,4-trimethylpentyl isobutyrate, glycerol monooleate, glycerol monoisostearate, tetrahydrofurfuryl acetate, ethyl 3-phenylglycidate, ethyl 3-methyl-3-phenylglycidate, 3',4'-epoxycyclohexylmethyl 3,4-epoxycyclohexanecarboxylate, epoxidized fatty acid isobutyl, and epoxidized fatty acid 2-ethylhexyl.

Specific examples of the ester compound (3) include aromatic esters such as isoamyl phenylacetate, benzyl isovalerate, benzyl acetoacetate, p-tolyl n-octanoate, benzyl stearate, benzyl epoxystearate, isoamyl phenylacetate, 2-ethylhexyl benzoate, hexyl hydroxybenzoate, benzyl benzoate, 2-isopropoxyethyl benzoate, benzyl hydroxybenzoate, benzyl 4-benzyloxybenzoate, furfuryl acetate, ethyl 2-furancarboxylate, tetrahydrofurfuryl propionate, n-octyl 2-furancarboxylate, and isoamyl 2-furancarboxylate.

### <Ester Compound (4)>

The ester compound (4) has a structure represented by chemical formula (4). The ester compound (4) is, for example, an aliphatic ester or an aromatic ester, such as an ester compound containing one dicarboxylic acid and two monoalcohols. When the ester compound (4) is an aliphatic ester, any or all of R⁹, R¹⁰, or X preferably contain at least one of a branched structure, a cyclic structure, or a heteroatom, and among these, R⁹ and R¹⁰ more preferably contain a branched structure, and X more preferably contains a cyclic structure. When the ester compound (4) is an aromatic ester, any one of R⁹, R¹⁰, and X may have at least one aromatic ring, and among these, a structure in which X contains an aromatic ring is preferred, and when X contains an aromatic ring, the aromatic ring is more preferably directly bonded to the carbon atom of the carbonyl group. 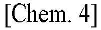 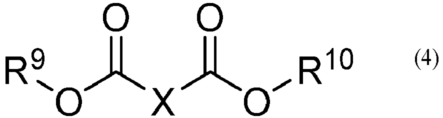 wherein X is a hydrocarbon group having 1 to 25 carbon atoms optionally containing a heteroatom, R⁹ and R¹⁰ are each a hydrocarbon group having 1 to 25 carbon atoms optionally containing a heteroatom, where the hydrocarbon groups of X and R⁹ to R¹⁰ are each aliphatic or aromatic, linear or branched, or have a cyclic structure.

The number of carbon atoms in the hydrocarbon groups of X and R⁹ and R¹⁰ is preferably 2 to 20, specifically, for example, 1, 2, 3, 4, 5, 6, 7, 8, 9, 10, 11, 12, 13, 14, 15, 16, 17, 18, 19, 20, 21, 22, 23, 24, or 25, and may be within the range between any two numerical values exemplified here. Examples of the heteroatom of X and R⁹ and R¹⁰ include oxygen atom, sulfur atom, and nitrogen atom, among which a structure containing oxygen atom is preferred.

When the hydrocarbon group of X has a cyclic structure, the cyclic structure preferably has at least one of an aromatic ring structure, an aliphatic six-membered ring structure, and a heteroatom-containing cyclic structure.

Specific examples of the ester compound (4) include aliphatic esters such as di-2-ethylhexyl succinate, diisononyl succinate, di-2-ethylhexyl maleate, diisononyl maleate, diisodecyl maleate, di-2-ethylhexyl fumarate, diisononyl fumarate, diisononyl fumarate, diisopropyl adipate, diisobutyl adipate, di-2-ethylhexyl adipate, diisononyl adipate, diisodecyl adipate, di-2-butoxyethyl adipate, heptylnonyl adipate, 1-benzyl 6-[2-(2-methoxyethoxy)ethyl] adipate, diisopropyl azelate, di-2-ethylhexyl azelate, diisononyl azelate, diisopropyl sebacate, di-2-ethylhexyl sebacate, diisononyl sebacate, diisodecyl sebacate, diisopropyl dodecanoate, di-2-ethylhexyl dodecanoate, diisononyl dodecanoate, and diisodecyl dodecanoate; and Specific examples of X containing a cyclic structure include diethyl 1,1-cyclohexanedicarboxylate, diethyl 4-oxocyclohexane-1,1-dicarboxylate, diethyl 1,2-cyclohexanedicarboxylate, diisopropyl 1,2-cyclohexanedicarboxylate, diglycidyl 1,2-cyclohexanedicarboxylate, dibutyl 1,2-cyclohexanedicarboxylate, di-2-ethylhexyl 1,2-cyclohexanedicarboxylate, diisononyl 1,2-cyclohexanedicarboxylate, diisodecyl 1,2-cyclohexanedicarboxylate, diethyl 1,3-cyclohexanedicarboxylate, diisopropyl 1,3-cyclohexanedicarboxylate, di-2-ethylhexyl 1,3-cyclohexanedicarboxylate, diisononyl 1,3-cyclohexanedicarboxylate, dimethyl 2-oxocyclohexane-1,3-dicarboxylate, dimethyl 2-oxocyclohexane-1,3-dicarboxylate, dimethyl 5-hydroxycyclohexane-1,3-dicarboxylate, dimethyl 1,4-cyclohexanedicarboxylate, diethyl 1,4-cyclohexanedicarboxylate, diallyl 1,4-cyclohexanedicarboxylate, dimethyl 1,4-cyclohexanedione-2,5-dicarboxylate, diethyl 1,4-cyclohexanedione-2,5-dicarboxylate, di-2-ethylhexyl 1,4-cyclohexanedicarboxylate, diisononyl 1,4-cyclohexanedicarboxylate, diethyl 4-cyclohexene-1,2-dicarboxylate, di-2-ethylhexyl 4-cyclohexene-1,2-dicarboxylate, diisononyl 4-cyclohexene-1,2-dicarboxylate, diethyl 4,5-epoxycyclohexane-1,2-dicarboxylate, di-2-ethylhexyl 4,5-epoxycyclohexane-1,2-dicarboxylate, diisononyl 4,5-epoxycyclohexane-1,2-dicarboxylate, 4,5-epoxycyclohexane-1,2-dicarboxylate distearyl, 4,5-epoxycyclohexane-1,2-dicarboxylate diepoxystearyl, dimethyl 1,3-adamantanedicarboxylate, di-2-ethylhexyl 3,4-tetrahydrofurancarboxylate, diethyl 2,5-tetrahydrofurancarboxylate, diisononyl 2,5-tetrahydrofurancarboxylate, and diisodecyl 2,5-tetrahydrofurancarboxylate.

Specific examples of the ester compound (4) include aromatic esters such as benzyloctyl adipate, isopropyl phthalate, isobutyl phthalate, cyclohexyl phthalate, di-2-ethylhexyl phthalate, di-2-ethylhexyl phthalate, diisononyl phthalate, diisodecyl phthalate, diundecyl phthalate, butyl cyclohexyl phthalate, butyl nonyl phthalate, ethyl phthalyl ethyl glycolate, butyl phthalyl butyl glycolate, butyl phthalyl ethyl glycolate, diphenyl phthalate, dibenzyl phthalate, benzyl butyl phthalate, octyl benzyl phthalate, benzyl 2-ethylhexyl phthalate, benzyl isononyl phthalate, benzyl isodecyl phthalate, hydroxyethyl 2-ethylhexyl phthalate, diethyl isophthalate, diisopropyl isophthalate, cyclohexyl isophthalate, di-n-octyl isophthalate, di-2-ethylhexyl isophthalate, diisononyl isophthalate, diisodecyl isophthalate, diethyl terephthalate, isopropyl terephthalate, cyclohexyl terephthalate, di-n-octyl terephthalate, di-2-ethylhexyl terephthalate, diisononyl terephthalate, diisodecyl terephthalate, diethyl 2,5-furandicarboxylate, diisopropyl 2,5-furandicarboxylate, di-2-ethylhexyl 2,5-furandicarboxylate, diisononyl 2,5-furandicarboxylate, di-2-ethylhexyl 3,4-furandicarboxylate, and di-n-decyl 3,4-furandicarboxylate.

### <Ester Compound (5)>

The ester compound (5) has a structure represented by chemical formula (5). The ester compound (5) is, for example, an aliphatic ester or an aromatic ester, such as an ester compound containing one tricarboxylic acid and three monoalcohols. When the ester compound (5) is an aliphatic ester, any or all of R¹¹ to R¹³ or X preferably contain at least one of a branched structure, a cyclic structure, or a heteroatom. When the ester compound (5) is an aromatic ester, any one of R¹¹ to R¹³ and X may have at least one aromatic ring, and among these, a structure in which X contains an aromatic ring is preferred, and when X contains an aromatic ring, the aromatic ring is more preferably directly bonded to the carbon atom of the carbonyl group. 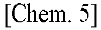 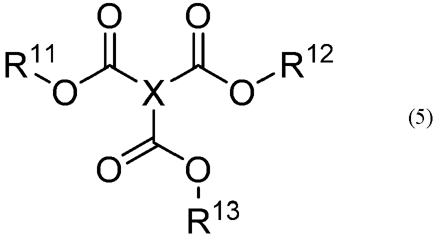 wherein X is a hydrocarbon group having 1 to 25 carbon atoms optionally containing a heteroatom, R¹¹ to R¹³ are each a hydrocarbon group having 1 to 25 carbon atoms optionally containing a heteroatom, where the hydrocarbon groups of X and R¹¹ to R¹³ are each aliphatic or aromatic, linear or branched, or have a cyclic structure.

The number of carbon atoms in the hydrocarbon groups of X and R¹¹ to R¹³ is preferably 2 to 18, specifically, for example, 1, 2, 3, 4, 5, 6, 7, 8, 9, 10, 11, 12, 13, 14, 15, 16, 17, 18, 19, 20, 21, 22, 23, 24, or 25, and may be within the range between any two numerical values exemplified here. Examples of the heteroatom of X and R¹¹ to R¹³ include oxygen atom, sulfur atom, and nitrogen atom, among which oxygen atom is preferred.

When the hydrocarbon group of X has a cyclic structure, the cyclic structure preferably has at least one of an aromatic ring structure, an aliphatic six-membered ring structure, and a heteroatom-containing cyclic structure.

Specific examples of the ester compound (5) include aliphatic esters such as triethylmethanetricarboxylate, triethyl citrate, triethyl acetylcitrate, tributyl citrate, tributyl acetylcitrate, trihexyl butyrylcitrate, trihexyl acetylcitrate, 2-ethylhexyl citrate, 2-ethylhexyl acetylcitrate, tri-2-ethylhexyl 1,3,4-cyclopentanetricarboxylate, triethyl 1,2,4-cyclohexanetricarboxylate, tri-2-ethylhexyl 1,2,4-cyclohexanetricarboxylate, triisononyl 1,2,4-cyclohexanetricarboxylate, and tris(2,2,4-trimethylpentyl) 1,2,4-cyclohexanetricarboxylate.

Specific examples of the ester compound (5) include aromatic esters such as tributyl trimellitate, tri-2-ethylhexyl trimellitate, tri-n-octyl trimellitate, triisononyl trimellitate, and tri-2-ethylhexyl 1,3,5-benzenetricarboxylate, and triisononyl 1,3,5-benzenetricarboxylate.

### <Ester Compound (6)>

The ester compound (6) has a structure represented by chemical formula (6). The ester compound (6) is, for example, an aliphatic ester or an aromatic ester, such as an ester compound containing one tetracarboxylic acid and four monoalcohols. When the ester compound (6) is an aliphatic ester, any or all of R¹⁴ to R¹⁷ or X preferably contain at least one of a branched structure, a cyclic structure, or a heteroatom, and among these, R¹⁴ to R¹⁷ more preferably contain a branched structure. When the ester compound (6) is an aromatic ester, any one of R¹⁴ to R¹⁷ and X may have at least one aromatic ring, and among these, a structure in which X contains an aromatic ring is preferred, and when X contains an aromatic ring, the aromatic ring is more preferably directly bonded to the carbon atom of the carbonyl group. 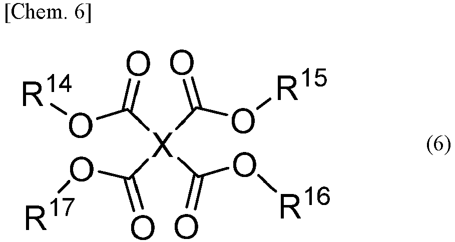 wherein X is a hydrocarbon group having 1 to 25 carbon atoms optionally containing a heteroatom, R¹⁴ to R¹⁷ are each a hydrocarbon group having 1 to 25 carbon atoms optionally containing a heteroatom, where the hydrocarbon groups of X and R¹⁴ to R¹⁷ are each aliphatic or aromatic, linear or branched, or have a cyclic structure.

The number of carbon atoms in the hydrocarbon groups of X and R¹⁴ to R¹⁷ is preferably 2 to 18, specifically, for example, 1, 2, 3, 4, 5, 6, 7, 8, 9, 10, 11, 12, 13, 14, 15, 16, 17, 18, 19, 20, 21, 22, 23, 24, or 25, and may be within the range between any two numerical values exemplified here. Examples of the heteroatom of X and R¹⁴ to R¹⁷ include oxygen atom, sulfur atom, and nitrogen atom, among which oxygen atom is preferred.

When the hydrocarbon group of X has a cyclic structure, the cyclic structure preferably has at least one of an aromatic ring structure, an aliphatic six-membered ring structure, and a heteroatom-containing cyclic structure.

Specific examples of the ester compound (6) include aliphatic esters such as tetraethyl 1,2,4,5-cyclohexanetetracarboxylate, tetraisopropyl 1,2,4,5-cyclohexanetetracarboxylate, tetra-2-ethylhexyl 1,2,4,5-cyclohexanetetracarboxylate, tetra-n-octyl 1,2,4,5-cyclohexanetetracarboxylate, isononyl 1,2,4,5-cyclohexanetetracarboxylate, triethyl tetrahydrofuran-2,3,4,5-tetracarboxylate, and 2-ethylhexyl tetrahydrofuran-2,3,4,5 -tetracarboxylate.

Specific examples of the ester compound (6) include aromatic esters such as tetraethyl pyromellitate, tetraisopropyl pyromellitate, tetra-2-ethylhexyl pyromellitate, tetra-n-octyl pyromellitate, and isononyl pyromellitate.

### <Ester Compound (7)>

The ester compound (7) has a structure represented by chemical formula (7). The ester compound (7) is, for example, an aliphatic ester or an aromatic ester, such as an ester compound containing one diol and two monocarboxylic acids. When the ester compound (7) is an aliphatic ester, any or all of R¹⁸ to R¹⁹ or X preferably contain at least one of a branched structure, a cyclic structure, or a heteroatom, and among these, the X portion more preferably contains a branched structure, a cyclic structure, or a heteroatom. When the ester compound (7) is an aromatic ester, any one of R¹⁸ to R¹⁹ and X may have at least one aromatic ring, and among these, a structure in which R¹⁸ to R¹⁹ contain an aromatic ring is preferred, and when R¹⁸ to R¹⁹ contain an aromatic ring, the aromatic ring is more preferably directly bonded to the carbon atom of the carbonyl group. 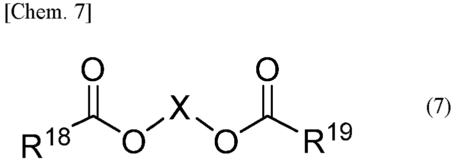 wherein X is a hydrocarbon group having 1 to 25 carbon atoms optionally containing a heteroatom, R¹⁸ to R¹⁹ are each a hydrocarbon group having 1 to 25 carbon atoms optionally containing a heteroatom, where the hydrocarbon groups of X and R¹⁸ to R¹⁹ are each aliphatic or aromatic, linear or branched, or have a cyclic structure.

When the hydrocarbon group of X has a cyclic structure, the cyclic structure preferably has at least one of an aromatic ring structure, an aliphatic six-membered ring structure, and a heteroatom-containing cyclic structure.

Specific examples of the ester compound (7) include aliphatic esters such as propylene glycol diacetate, 1,3-butylene glycol diacetate,1,2-pentanediol diacetate, 1,6-hexanediol diacetate, 2,2,4-trimethyl-1,3-pentanediol diacetate, 2,2,4-trimethyl-1,3-pentanediol diisobutyrate, 2,2,4-trimethyl-1,3-pentanediol di-2-methylbutyrate, 1,4-cyclohexanedimethanol diisovalerate, 2,2,4-trimethyl-1,3-pentanediol di-2-ethylhexanoate, 1,4-cyclohexanedimethanol bis(2-ethylhexanoate), triethylene glycol di(2-ethylhexanoate), propylene glycol dilaurate, and isosorbide di-2-ethylhexanoate.

Specific examples of the ester compound (7) include aromatic esters such as 2,5-diacetoxytoluene, 2,5-dibutoxytoluene, 2,2,4-trimethyl-1,3-pentanediol dibenzoate, diethylene glycol dibenzoate, and dipropylene glycol dibenzoate.

### <Ester Compound (8)>

The ester compound (8) has a structure represented by chemical formula (8). The ester compound (8) is, for example, an aliphatic ester or an aromatic ester, such as an ester compound containing one triol and three monocarboxylic acids. When the ester compound (8) is an aliphatic ester, any or all of R²⁰ to R²² or X preferably contain at least one of a branched structure, a cyclic structure, or a heteroatom, and among these, the X portion more preferably contains a branched structure, a cyclic structure, or a heteroatom. When the ester compound (8) is an aromatic ester, any one of R²⁰ to R²² and X may have at least one aromatic ring, and among these, a structure in which R²⁰ to R²² contain an aromatic ring is preferred, and when R²⁰ to R²² contain an aromatic ring, the aromatic ring is more preferably directly bonded to the carbon atom of the carbonyl group. 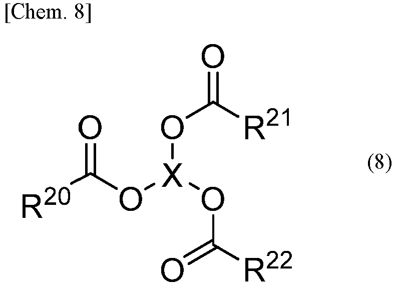 wherein X is a hydrocarbon group having 1 to 25 carbon atoms optionally containing a heteroatom, R²⁰ to R²² are each a hydrocarbon group having 1 to 25 carbon atoms optionally containing a heteroatom, where the hydrocarbon groups of X and R²⁰ to R²² are each aliphatic or aromatic, linear or branched, or have a cyclic structure.

When the hydrocarbon group of X has a cyclic structure, the cyclic structure preferably has at least one of an aromatic ring structure, an aliphatic six-membered ring structure, and a heteroatom-containing cyclic structure.

Specific examples of the ester compound (8) include aliphatic esters such as glycerol triacetate, glycerol tributyrate, glycerol tris(2-ethylhexanoate), glycerol trioctanoate, glycerol trilaurate, glycerol tristearate, glycerol trioleate, diacetyl lauroyl glycerol, epoxidized soybean oil, and epoxidized linseed oil.

Specific examples of the ester compound (8) include aromatic esters such as 1,2,4-triacetoxybenzene, 1,2,4-isopropanoxybenzene, and 2-benzylglycerol diacetate.

### <Method for Obtaining or Producing Ester Compound C, Blending Method, and Blending Amount>

The ester compound C is not particularly limited, and those produced by known methods, commercially available products, reagents, and the like may be used.

Examples of the known production methods include dehydration condensations reaction between a carboxylic acid and an alcohol, transesterification reactions between an ester and an alcohol, and ester synthesis reactions between a carboxylic acid chloride and an alcohol. Further, some ester compounds may be produced by a method of epoxidizing or hydrogenating an unsaturated portion of a commercially available analogous compound, or by partial conversion of a commercially available product, such as a substitution reaction or a coupling reaction of a commercially available ester compound.

### 1-3. Antifouling Agent D

Examples of antifouling agents include inorganic agents and organic agents.
Examples of inorganic chemicals include cuprous oxide, copper thiocyanate (generic name: copper rhodanide), and copper powder. Among these, preferred are cuprous oxide and copper rhodanide, and more preferred is cuprous oxide surface-treated with glycerin, sucrose, stearic acid, lauric acid, lecithin, mineral oil and the like in view of long-term stability during storage.

Examples of organic agents include copper 2-mercaptopyridine-N-oxide (generic name: copper pyrithione), zinc 2-mercaptopyridine-N-oxide (generic name: zinc pyrithione), zinc ethylene-bis-dithiocarbamate (generic name: Zineb), 4,5-dichloro-2-n-octyl-3-isothiazolone (generic name: SEA-NINE 211), 3,4-dichlorophenyl-N,N-dimethylurea (generic name: Diuron), 2-methylthio-4-t-butylamino-6-cyclopropylamino-s-triazine (generic name: Irgarol 1051), 2-(p-chlorophenyl)-3-cyano-4-bromo-5-trifluoromethylpyrrole (generic name: Econea 28), and 4-[1-(2,3-dimethylphenyl)ethyl]-1H-imidazole (generic name: medetomidine).
These antifouling agents may be used singly, or two or more thereof may be used in combination.

The content of the antifouling agent in the composition of the present invention is not particularly limited, but is usually 0.1 to 60.0% by mass, in terms of solid content. The content of the antifouling agent is, for example, 0.1, 0.5, 1, 2, 3, 4, 5, 6, 7, 8, 9, 10, 15, 20, 25, 30, 35, 40, 45, 50, 55, or 60% by mass, and may be within the range between any two numerical values exemplified here.

### 1-4. Other additives

If necessary, a resin component other than the copolymer A, a release modifier, a plasticizer, a pigment, a dye, an antifoaming agent, a dehydrating agent, a thixotropic agent, an organic solvent, or the like may be further added to the resin for the antifouling coating material of the present invention to obtain the antifouling coating material.

Examples of the other resin component include copolymer B and polymer P.

The copolymer B is a copolymer of the monomer (b1) and the monomer (b2), and contains monomer units derived from the monomer (b1) and the monomer (b2). The content of the monomer (b1) with respect to the total of the monomer (b1) and the monomer (b2) is preferably 10 to 90% by mass, and still more preferably 20 to 70% by mass. Specifically, the content thereof is, for example, 10, 15, 20, 25, 30, 35, 40, 45, 50, 55, 60, 65, 70, 75, 80, 85, or 90% by mass, and may be within the range between any two numerical values exemplified here. In this case, the coating film dissolubility is particularly good.

The polymerization method, initiator, solvent, temperature, other conditions, Mw measurement method, and the like may be applied to the method described above for the copolymer A.

The content of the copolymer B in the composition of the present invention is not particularly limited, but the mass ratio (copolymer B/copolymer A) as the content ratio with respect to the copolymer A is usually 0.1 to 0.9, and preferably 0.3 to 0.7, in terms of solid content. The mass ratio is, for example, 0.1, 0.2, 0.3, 0.4, 0.5, 0.6, 0.7, 0.8, or 0.9, and may be within the range between any two numerical values exemplified here.

The polymer P is a polymer obtained by polymerizing the monomer (b2).

In the present invention, these monomers (b2) may be used singly, or two or more thereof may be used in combination. In particular, from the viewpoint of compatibility with the copolymer A, preferred are methyl (meth)acrylate, ethyl (meth)acrylate, butyl (meth)acrylate, isobutyl (meth)acrylate, t-butyl (meth)acrylate, 2-ethylhexyl (meth)acrylate, 2-methoxyethyl (meth)acrylate, 2-ethoxyethyl (meth)acrylate, furfuryl (meth)acrylate, tetrahydrofurfuryl (meth)acrylate, benzyl (meth)acrylate, and the like.

The polymerization method, initiator, solvent, temperature, other conditions, Mw measurement method, and the like may be applied to the method described above for the copolymer A.

The content of the polymer P in the composition of the present invention is not particularly limited, but the mass ratio (polymer P/copolymer A) as the content ratio with respect to the copolymer A is usually 0.1 to 0.5, and preferably 0.1 to 0.3, in terms of solid content. The mass ratio is, for example, 0.1, 0.2, 0.3, 0.4, or 0.5, and may be within the range between any two numerical values exemplified here.

Examples of the release modifier include rosin, rosin derivative, monocarboxylic acid and salts thereof, such as naphthenic acid, cycloalkenyl carboxylic acid, bicycloalkenyl carboxylic acid, versatic acid, trimethyl isobutenyl cyclohexene carboxylic acid, and metal salts thereof, and alicyclic hydrocarbon resins described above. These may be used singly or in combination of two or more thereof.

Examples of the rosin derivative include hydrogenated rosin, disproportionated rosin, maleated rosin, formylated rosin, and polymerized rosin.

Examples of the alicyclic hydrocarbon resin include commercially available products such as Quintone 1500, 1525L, and 1700 (product names, manufactured by Zeon Corporation).

Among these, preferred are rosin, rosin derivatives, naphthenic acid, versatic acid, trimethylisobutenylcyclohexenecarboxylic acid, and metal salts thereof.

Examples of the dehydrating agent include calcium sulfate, synthetic zeolite adsorbents, orthoesters, silicates such as tetramethoxysilane and tetraethoxysilane, isocyanates, carbodiimides, and carbodiimidazoles. These may be used singly, or two or more thereof may be used in combination.

### 2. Method for Producing Antifouling Coating Composition

The antifouling coating composition of the present invention may be produced, for example, by mixing and dispersing a mixed solution containing the copolymer, the antifouling agent, other additives, and the like using a disperser.

The mixed solution is preferably prepared by dissolving or dispersing various materials such as the copolymer and the antifouling agent in a solvent.

A disperser that may be used as a fine pulverizer may be suitably used, for example, as the disperser. For example, commercially available homomixers, sand mills, bead mills, dispersers, or the like may be used. Alternatively, glass beads or the like for mixing and dispersing may be charged into a container equipped with a stirrer and used for mixing and dispersing the mixed solution.

### 3. Method for Antifouling Treatment, Antifouling Coating Film, and Coated Article

In the antifouling treatment method of the present invention, an antifouling coating film is formed on the surface of an object to be coated with the above antifouling coating composition. According to the antifouling treatment method of the present invention, the antifouling coating film gradually dissolves from the surface and the coating film surface is constantly renewed, thereby preventing adhesion of aquatic fouling organisms.

Examples of the object to be coated include ships (in particular, ship bottoms), fishing tools, and underwater structures.

The thickness of the antifouling coating film may be set as appropriate according to the type of object to be coated, sailing speed of the ship, seawater temperature, and the like. For example, in a case where the object to be coated is the bottom of a ship, the thickness of the antifouling coating film is usually 50 to 700 µm, and preferably 100 to 600 µm.

### EXAMPLES

The features of the present invention will be further clarified by Examples and the like to be described below. The present invention, however, is not limited to these Examples and the like.

In each of Production Examples, Examples, and Comparative Examples, "%" represents "% by mass". The weight-average molecular weight (Mw) is a value obtained by GPC (polystyrene equivalent). The conditions for GPC were as follows.
Equipment: HLC-8220GPC manufactured by Tosoh Corporation
Column: TSKgel SuperHZM-M × 2
Flow rate: 0.35 mL/min
Detector: RI
Column thermostatic bath temperature: 40°C
Eluent: THF

The non-volatile matter is a value measured in accordance with JIS K 5601-1-2:1999 (ISO 3251:1993) "Testing Methods for Paint Components: Determination Of Non-Volatile matter".

### 1. Production Example

### 1-1. Production Example of Monomer (a1)

### <Production Example 1 (Production of Monomer a1-1)>

Into a four-necked flask equipped with a thermometer, a condenser, a stirrer, and a dropping funnel, 109 g (1.00 mol) of methyl chloroacetate, 72 g (1.00 mol) of acrylic acid, 0.1 g of 4-methoxyphenol, and 500 g of ethyl acetate were charged, and 101 g (1.00 mol) of triethylamine was added dropwise to the mixture with stirring while maintaining the temperature at 40°C or lower. After completion of the dropwise addition, the mixture was stirred at 70 to 80°C for 6 hours. After completion of the reaction, the organic layer was washed with city water, hydrochloric acid water, and sodium bicarbonate water in this order, and the solvent was removed by concentration under reduced pressure to give 129.7 g of a monomer a1-1.

### <Production Examples 2 to 3 (Production of Monomers a 1-2 to a1-3)>

Monomers a1-2 to a1-3 were obtained by performing reactions in the same manner as in Production Example 1 using the raw materials shown in Table 1. The reaction conditions and yields of Production Examples 1 to 3 are shown in Table 1.

**[Table 1]**

| Table 1 | | | | | Raw material (g) | | | | | | | Yield |
|---|---|---|---|---|---|---|---|---|---|---|---|---|
| Production Example | Monomer | R1 | R2 | R3 | CAMe | CAEt | AA | MAA | TEA | Ethyl acetate | MEHQ | (g) |
| 1 | a1-1 | H | H | Me | 109 | | 72 | | 101 | 500 | 0.1 | 129.7 |
| 2 | a 1-2 | H | H | Et | | 123 | 72 | | 101 | 500 | 0.1 | 142.3 |
| 3 | a1-3 | Me | H | Et | | 123 | | 86 | 101 | 500 | 0.1 | 155.0 |

### 1-2. Production Example of Monomer (a2)

### <Production Example 4 (Production of Monomer a2-1)>

### (First Reaction)

Into a four-necked flask equipped with a thermometer, a condenser, and a stirrer, 215 g (1.85 mol) of sodium monochloroacetate, 201 g (1.85 mol) of methyl chloroacetate, and 300 g of N-methyl-2-pyrrolidone were charged, and the mixture was stirred at 70 to 80°C for 6 hours. After completion of the reaction, 500 ml of toluene was added to the reaction solution, and the organic layer was washed with city water, hydrochloric acid water, and sodium bicarbonate water in this order, and then the solvent was removed by concentration under reduced pressure to give 262 g of methoxycarbonyl methyl chloroacetate.

### (Second Reaction)

Subsequently, into a four-necked flask equipped with a thermometer, a condenser, a stirrer, and a dropping funnel, 200 g (1.20 mol) of methoxycarbonyl methyl chloroacetate, which is the product of the first reaction, 87 g (1.20 mol) of acrylic acid, 0.1 g of 4-methoxyphenol, and 500 g of ethyl acetate were charged, and 122 g (1.20 mol) of triethylamine was added dropwise to the mixture with stirring while maintaining the temperature at 40°C or lower. After completion of the dropwise addition, the mixture was stirred at 70 to 80°C for 6 hours. After completion of the reaction, the organic layer was washed with city water, hydrochloric acid water, and sodium bicarbonate water in this order, and the solvent was removed by concentration under reduced pressure to give 230.6 g of a monomer a2-1.

### <Production Examples 5 to 18 (Production of Monomers a2-2 to a2-15)>

Monomers a2-2 to a2-15 shown in Table 2 were obtained by performing reactions in the same manner as in Production Example 4 using the raw materials shown in Table 2. The reaction conditions and yields of Production Examples 4 to 18 are shown in Table 2.

**[Table 2]**

| Table 2 | | | | | | First reaction | | | | | Second reaction | | | | | | |
|---|---|---|---|---|---|---|---|---|---|---|---|---|---|---|---|---|---|
| | | | | | | Raw material (g) | | | | Intermediate | Raw material (g) | | | | | | Yield |
| Production Example | Monomer | R1 | R2 | R3 | n | CANa | CAMe | CAEt | NMP | Yield (g) | Intermediate | AA | MAA | TEA | Ethyl acetate | MEHQ | (g) |
| 4 | a2-1 | H | H | Me | 2 | 215 | 201 | | 300 | 262 | 200 | 87 | | 122 | 500 | 0.1 | 230.6 |
| 5 | a2-2 | H | H | Et | 2 | 199 | | 209 | 300 | 269 | 200 | 80 | | 112 | 500 | 0.1 | 227.5 |
| 6 | a2-3 | Me | H | Et | 2 | 199 | | 209 | 300 | 269 | 200 | | 95 | 112 | 500 | 0.1 | 227.5 |
| 7 | a2-4 | H | H | Me | 3 | 321 | 150 | | 300 | 260 | 200 | 64 | | 90 | 500 | 0.1 | 220.1 |
| 8 | a2-5 | H | H | Et | 3 | 305 | | 160 | 300 | 266 | 200 | 60 | | 85 | 500 | 0.1 | 218.3 |
| 9 | a2-6 | Me | H | Et | 3 | 305 | | 160 | 300 | 266 | 200 | | 72 | 85 | 500 | 0.1 | 218.3 |
| 10 | a2-7 | H | H | Me | 4 | 384 | 119 | | 300 | 261 | 200 | 51 | | 72 | 500 | 0.1 | 232.8 |
| 11 | a2-8 | H | H | Et | 4 | 349 | | 123 | 300 | 252 | 200 | 49 | | 68 | 500 | 0.1 | 193.6 |
| 12 | a2-9 | Me | H | Et | 4 | 349 | | 123 | 300 | 252 | 200 | | 58 | 68 | 500 | 0.1 | 193.6 |
| 13 | a2-10 | H | H | Me | 5 | 419 | 98 | | 300 | 258 | 200 | 42 | | 59 | 500 | 0.1 | 208.8 |
| 14 | a2-11 | H | H | Et | 5 | 373 | | 98 | 300 | 241 | 200 | 41 | | 57 | 500 | 0.1 | 177.0 |
| 15 | a2-12 | Me | H | Et | 5 | 382 | | 100 | 300 | 247 | 200 | | 49 | 57 | 500 | 0.1 | 177.0 |
| 16 | a2-13 | H | H | Me | 6 | 437 | 81 | | 300 | 251 | 200 | 36 | | 51 | 500 | 0.1 | 191.8 |
| 17 | a2-14 | H | H | Et | 6 | 408 | | 86 | 300 | 246 | 200 | 35 | | 49 | 500 | 0.1 | 165.0 |
| 18 | a2-15 | Me | H | Et | 6 | 408 | | 86 | 300 | 246 | 200 | | 42 | 49 | 500 | 0.1 | 165.0 |

The details of the raw materials in Tables 1 to 2 are as follows.
CAMe: methyl chloroacetate
CAEt: ethyl chloroacetate
AA: acrylic acid
MAA: methacrylic acid
TEA: triethylamine
MEHQ: 4-methoxyphenol
CANa: sodium monochloroacetate
NMP: N-methyl-2-pyrrolidone

### 1-3. Production Example of Copolymer Solution

### <Production Example P1 (Production of Copolymer Solution A-1)>

Into a four-necked flask equipped with a thermometer, a condenser, a stirrer, and a dropping funnel, 80 g of xylene and 20 g of 1-butanol were charged as solvents, nitrogen gas was introduced, and the mixture was stirred while maintaining the temperature 88°C. Then, a mixed solution of the monomer (a1), the monomer (a2), and the monomer (b) in the amounts (g) shown in Table 3 and 2.0 g of 1,1,3,3-tetramethylbutylperoxy-2-ethylhexanoate as a polymerization initiator (initial addition) was added dropwise over 3 hours while maintaining the temperature at 88°C. Thereafter, after stirring at 88°C for 1 hour, 0.1 g of 1,1,3,3-tetramethylbutylperoxy-2-ethylhexanoate was added 3 times every hour, and after stirring for 2 hours at the same temperature, the mixture was cooled to room temperature to obtain a copolymer solution A-1. The non-volatile matter and Mw of A-1 are shown in Table 3.

### <Production Examples P2 to P5 (Production of Copolymer Solutions A-2 to A-5)>

Copolymer solutions A-2 to A-5 were obtained by performing a polymerization reaction in the same manner as in Production Example P1 except that the monomers, polymerization initiators, and solvents shown in Table 3 were used. The non-volatile matter and Mw of each polymer are shown in Table 3. The unit of numerical values for the amounts of raw materials in the table is g.

**[Table 3]**

| Table 3 | | Copolymer Solution Production Example | | | | |
|---|---|---|---|---|---|---|
| | | P1 | P2 | P3 | P4 | P5 |
| Monomer (a1) | a1-1 | 33 | | | | |
| | a1-2 | | 40 | 40 | | 20 |
| | a1-3 | | | | 47 | 23 |
| Monomer (a2) | a2-1 | 10 | | | | |
| | a2-2 | | 12 | 12 | | 4 |
| | a2-3 | | | | 8 | 4 |
| | a2-4 | 4 | | | | |
| | a2-5 | | 5 | 5 | | 3 |
| | a2-6 | | | | 2 | 2 |
| | a2-7 | 1 | | | | |
| | a2-8 | | 1 | 1 | | 1 |
| | a2-9 | | | | 1 | 1 |
| | a2-10 | 1 | | | | |
| | a2-11 | | 1 | 1 | | 1 |
| | a2-12 | | | | 1 | 1 |
| | a2-13 | 1 | | | | |
| | a2-14 | | 1 | 1 | | |
| | a2-15 | | | | 1 | |
| Monomer (b) | methyl methacrylate | 40 | 30 | 35 | 30 | 22 |
| | 2-methoxyethyl acrylate | 10 | 10 | | 10 | 10 |
| | triisopropylsilyl acrylate | | | 5 | | 3 |
| | triisopropylsilyl methacrylate | | | | | 5 |
| Total of monomer solid contents | | 100 | 100 | 100 | 100 | 100 |
| Solvent | xylene | 80 | 80 | 50 | 100 | 50 |
| | 1-butanol | 20 | 20 | | | |
| | butyl acetate | | | 50 | | 50 |
| Weight-average molecular weight (Mw) | | 31200 | 31400 | 31000 | 29900 | 30500 |
| Non-volatile matter (%, 125°C, 1 hour) | | 51.2 | 51.5 | 51.6 | 51.5 | 51.5 |
| Copolymer solution name | | A-1 | A-2 | A-3 | A-4 | A-5 |

### <Production Example P6 (Production of Copolymer Solution B-1)>

Into a flask equipped with a thermometer, a refluxing condenser, a stirrer, and a dropping funnel, 200 g of xylene was charged, and under a nitrogen atmosphere with stirring at 85±5°C, a mixed solution of 270 g of triisopropylsilyl acrylate, 200 g of methyl methacrylate, 25 g of 2-methoxyethyl acrylate, 5 g of tetrahydrofurfuryl acrylate, and 2.4 g of 1,1,3,3-tetramethylbutylperoxy-2-ethylhexanoate as a polymerization initiator was added dropwise over 2 hours. After stirring at the same temperature for 1 hour, 0.3 g of 1,1,3,3-tetramethylbutylperoxy-2-ethylhexanoate was added 5 times every hour to complete the polymerization reaction, and thereafter, xylene was added and dissolved such that the non-volatile matter was 50%, thereby obtaining a triorganosilyl ester-containing copolymer solution B-1. The resulting copolymer solution had a viscosity of 300 mPa·s (25°C), a non-volatile matter of 49.5%, and an Mw of 48,000.

### 1-4. Other Production Examples

### <Production Example D1 (Production of Gum Rosin Solution)>

Into a flask equipped with a thermometer, a refluxing condenser, and a stirrer, 300 g of Chinese gum rosin (WW) and 310 g of xylene were added, and the mixture was refluxed and dehydrated under reduced pressure at 70 to 80°C for 1 hours to obtain a xylene solution of gum rosin (brown transparent liquid, solid content: 50%). The non-volatile matter of the resulting solution was 50.3%.

### <Production Example D2 (Production of Hydrogenated Rosin Solution)>

A xylene solution of hydrogenated rosin (brown transparent liquid, solid content: 50%) was obtained in the same manner as in Production Example D1, except that Chinese gum rosin (WW) in Production Example D1 was changed to hydrogenated rosin. The non-volatile matter of the resulting solution was 50.1%.

### <Production Example D3 (Production of Gum Rosin Zinc Salt Solution)>

Into a flask equipped with a thermometer, a refluxing condenser, and a stirrer, 240 g of Chinese gum rosin (WW) and 360 g of xylene were added, and 120 g of zinc oxide was further added thereto so that all the resin acids in the rosin form zinc salts, and the mixture was refluxed and dehydrated under reduced pressure at 70 to 80°C for 3 hours. Thereafter, the mixture was cooled and filtered to obtain a xylene solution of gum rosin zinc salt (dark brown transparent liquid, solid content 50%). The non-volatile matter of the resulting solution was 50.2%.

### <Production Example D4 (Production of Hydrogenated Rosin Zinc Salt Solution)>

A xylene solution of hydrogenated rosin zinc salt (dark brown transparent liquid, solid content: 50%) was obtained in the same manner as in Production Example D3, except that Chinese gum rosin (WW) in Production Example D3 was changed to hydrogenated rosin. The non-volatile matter of the resulting solution was 50.5%.

### 2. Examples 1 to 91 and Comparative Examples 1 to 16 (Production of Coating Composition)

The components shown in Tables 4 to 13 were blended in the proportions (% by mass) shown in the same tables, and the coating compositions were produced by mixing and dispersing the mixture with glass beads of 1.5 to 2.5 mm in diameter.

**[Table 4]**

| Table 4 | | Example | | | | | | | | | | | | | |
|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 |
| \| Copolvmer A | copolymer solution A-1 | 25 | 25 | 25 \| | 25 | 25 | 25 | 25 \| | 25 \| | 25 \| | 25 \| | 25 \| | 25 \| | 25 \| | 25 |
| Ester compound C | DAD | 1.5 | | | | | | | | | | | | | |
| | PAiPr | | 1.5 | | | | | | | | | | | | |
| | MENTA | | | 1.5 | | | | | | | | | | | |
| | i-BoAc | | | | 1.5 | | | | | | | | | | |
| | LAHD | | | | | 1.5 | | | | | | | | | |
| | MISAG | | | | | | 1.5 | | | | | | | | |
| | ARAM | | | | | | | 1.5 | | | | | | | |
| | DHJAM | | | | | | | | 1.5 | | | | | | |
| | E-6000 | | | | | | | | | 1.5 | | | | | |
| | ECHECH | | | | | | | | | | 1.5 | | | | |
| | PATHF | | | | | | | | | | | 1.5 | | | |
| | BAEH | | | | | | | | | | | | 1.5 | | |
| | n-OFA | | | | | | | | | | | | | 1.5 | |
| | MPhGAE | | | | | | | | | | | | | | 1.5 |
| Antifouling agent D | cuprous oxide | 45 | 45 | 45 | 45 | 45 | 45 | 45 | 45 | 45 | 45 | 45 | 45 | 45 | 45 |
| | copper pvrithione | 3 | 3 | 3 | 3 | 3 | 3 | 3 | 3 | 3 | 3 | 3 | 3 | 3 | 3 |
| Release modifier | hydrogenated rosin zinc salt solution | 3 | 3 | 3 | 3 | 3 | 3 | 3 | 3 | 3 | 3 | 3 | 3 | 3 | 3 |
| | gum rosin zinc salt solution | 3 | 3 | 3 | 3 | 3 | 3 | 3 | 3 | 3 | 3 | 3 | 3 | 3 | 3 |
| Pigment | red iron oxide | 2 | 2 | 2 | 2 | 2 | 2 | 2 | 2 | 2 | 2 | 2 | 2 | 2 | 2 |
| | talc | 2 | 2 | 2 | 2 | 2 | 2 | 2 | 2 | 2 | 2 | 2 | 2 | 2 | 2 |
| | zinc oxide | 4 | 4 | 4 | 4 | 4 | 4 | 4 | 4 | 4 | 4 | 4 | 4 | 4 | 4 |
| | titanium oxide | 1 | 1 | 1 | 1 | 1 | 1 | 1 | 1 | 1 | 1 | 1 | 1 | 1 | 1 |
| Other additives \| | Disparlon A603-20X | 3 | 3 | 3 | 3 | 3 | 3 | 3 | 3 | 3 | 3 | 3 | 3 | 3 | 3 |
| Solvent | xylene | 4.5 | 4.5 | 4.5 | 4.5 | 4.5 | 4.5 | 4.5 | 4.5 | 4.5 | 4.5 | 4.5 | 4.5 | 4.5 | 4.5 |
| | 1-butanol | 3 | 3 | 3 | 3 | 3 | 3 | 3 | 3 | 3 | 3 | 3 | 3 | 3 | 3 |
| Total | | 100 | 100 | 100 | 100 | 100 | 100 | 100 | 100 | 100 | 100 | 100 | 100 | 100 | 100 |
| Test Example 1 Rotary Test | average coating film dissolution amount | A | AA | AA | AA | AA | AA | AA | AA | AA | AA | AA | AA | AA | AA |
| | coating film condition after 24 months | A | A | AA | A | AA | A | AA | AA | AA | AA | AA | AA | AA | A |
| Test Example 2 Antifouling Test | 18 months later | AA | AA | AA | AA | AA | AA | AA | AA | AA | AA | AA | AA | AA | AA |
| | 36 months later | A | AA | AA | A | AA | A | AA | AA | AA | AA | A | AA | A | A |

**[Table 5]**

| Table 5 | | Example | | | | | | | | | | | | | |
|---|---|---|---|---|---|---|---|---|---|---|---|---|---|---|---|
| | | 15 | 16 | 17 | 18 | 19 | 20 | 21 | 22 | 23 | 24 | 25 | 26 | 27 | 28 |
| Copolvmer A | copolymer solution A-1 | 25 | 25 | 25 | 25 | 25 | 25 | 25 | 25 | 25 | 25 | 25 | 25 | 25 | 25 |
| Ester compound C | AADBE | 1.5 | | | | | | | | | | | | | |
| | AAEH | | 1.5 | | | | | | | | | | | | |
| | AADiN | | | 1.5 | | | | | | | | | | | |
| | AADiD | | | | 1.5 | | | | | | | | | | |
| | AzAEH | | | | | 1.5 | | | | | | | | | |
| | DOS | | | | | | 1.5 | | | | | | | | |
| | DECH | | | | | | | 1.5 | | | | | | | |
| | DGCH | | | | | | | | 1.5 | | | | | | |
| | DMCDO | | | | | | | | | 1.5 | | | | | |
| | DINCH | | | | | | | | | | 1.5 | | | | |
| | DEHTH | | | | | | | | | | | 1.5 | | | |
| | E-PS | | | | | | | | | | | | 1.5 | | |
| | EP-18 | | | | | | | | | | | | | 1.5 | |
| | E-PO | | | | | | | | | | | | | | 1.5 |
| Antifouling agent D | cuprous oxide | 45 | 45 | 45 | 45 | 45 | 45 | 45 | 45 | 45 | 45 | 45 | 45 | 45 | 45 |
| | copper pvrithione | 3 | 3 | 3 | 3 | 3 | 3 | 3 | 3 | 3 | 3 | 3 | 3 | 3 | 3 |
| Release modifier | hydrogenated rosin zinc salt solution | 3 | 3 | 3 | 3 | 3 | 3 | 3 | 3 | 3 | 3 | 3 | 3 | 3 | 3 |
| | gum rosin zinc salt solution | 3 | 3 | 3 | 3 | 3 | 3 | 3 | 3 | 3 | 3 | 3 | 3 | 3 | 3 |
| Pigment | red iron oxide | 2 | 2 | 2 | 2 | 2 | 2 | 2 | 2 | 2 | 2 | 2 | 2 | 2 | 2 |
| | talc | 2 | 2 | 2 | 2 | 2 | 2 | 2 | 2 | 2 | 2 | 2 | 2 | 2 | 2 |
| | zinc oxide | 4 | 4 | 4 | 4 | 4 | 4 | 4 | 4 | 4 | 4 | 4 | 4 | 4 | 4 |
| | titanium oxide | 1 | 1 | 1 | 1 | 1 | 1 | 1 | 1 | 1 | 1 | 1 | 1 | 1 | 1 |
| Other additives | Disparlon A603-20X | 3 | 3 | 3 | 3 | 3 | 3 | 3 | 3 | 3 | 3 | 3 | 3 | 3 | 3 |
| Solvent | xylene | 4.5 | 4.5 | 4.5 | 4.5 | 4.5 | 4.5 | 4.5 | 4.5 | 4.5 | 4.5 | 4.5 | 4.5 | 4.5 | 4.5 |
| | 1-butanol | 3 | 3 | 3 | 3 | 3 | 3 | 3 | 3 | 3 | 3 | 3 | 3 | 3 | 3 |
| Total | | 100 | 100 | 100 | 100 | 100 | 100 | 100 | 100 | 100 | 100 | 100 | 100 | 100 | 100 |
| Test Example 1 Rotary Test | average coating film dissolution amount | AA | AA | AA | AA | AA | AA | A | A | AA | AA | AA | AA | AA | AA |
| | coating film condition after 24 months | AA | A | AA | AA | AA | AA | A | A | A | AA | AA | AA | AA | AA |
| Test Example 2 Antifouling Test | 18 months later | AA | AA | AA | AA | AA | AA | AA | AA | AA | AA | AA | AA | AA | AA |
| | 36 months later | AA | AA | AA | AA | AA | AA | A | A | A | AA | AA | AA | AA | AA |

**[Table 6]**

| Table 6 | | Example | | | | | | | | | | | | | |
|---|---|---|---|---|---|---|---|---|---|---|---|---|---|---|---|
| | | 29 | 30 | 31 | 32 | 33 | 34 | 35 | 36 | 37 | 38 | 39 | 40 | 41 | 42 |
| Copolymer A | copolymer solution A-1 | 25 | 25 | 25 | 25 | 25 | 25 | 25 | 25 | 25 | 25 | 25 | 25 | 25 | 25 |
| Ester compound C | DEHP | 1.5 | | | | | | | | | | | | | |
| | DINP | | 1.5 | | | | | | | | | | | | |
| | DIDP | | | 1.5 | | | | | | | | | | | |
| | EPEG | | | | 1.5 | | | | | | | | | | |
| | BPBG | | | | | 1.5 | | | | | | | | | |
| | m-PAEH | | | | | | 1.5 | | | | | | | | |
| | p-PAEH | | | | | | | 1.5 | | | | | | | |
| | TECA | | | | | | | | 1.5 | | | | | | |
| | TEACA | | | | | | | | | 1.5 | | | | | |
| | TBACA | | | | | | | | | | 1.5 | | | | |
| | TEHACA | | | | | | | | | | | 1.5 | | | |
| | BTHC | | | | | | | | | | | | 1.5 | | |
| | TEHTM | | | | | | | | | | | | | 1.5 | |
| | TiNTM | | | | | | | | | | | | | | 1.5 |
| Antifouling agent D | cuprous oxide | 45 | 45 | 45 | 45 | 45 | 45 | 45 | 45 | 45 | 45 | 45 | 45 | 45 | 45 |
| | copper pyrithione | 3 | 3 | 3 | 3 | 3 | 3 | 3 | 3 | 3 | 3 | 3 | 3 | 3 | 3 |
| Release modifier | hydrogenated rosin zinc salt solution | 3 | 3 | 3 | 3 | 3 | 3 | 3 | 3 | 3 | 3 | 3 | 3 | 3 | 3 |
| | gum rosin zinc salt solution | 3 | 3 | 3 | 3 | 3 | 3 | 3 | 3 | 3 | 3 | 3 | 3 | 3 | 3 |
| Pigment | red iron oxide | 2 | 2 | 2 | 2 | 2 | 2 | 2 | 2 | 2 | 2 | 2 | 2 | 2 | 2 |
| | talc | 2 | 2 | 2 | 2 | 2 | 2 | 2 | 2 | 2 | 2 | 2 | 2 | 2 | 2 |
| | zinc oxide | 4 | 4 | 4 | 4 | 4 | 4 | 4 | 4 | 4 | 4 | 4 | 4 | 4 | 4 |
| | titanium oxide | 1 | 1 | 1 | 1 | 1 | 1 | 1 | 1 | 1 | 1 | 1 | 1 | 1 | 1 |
| Other additives | Disparlon A603-20X | 3 | 3 | 3 | 3 | 3 | 3 | 3 | 3 | 3 | 3 | 3 | 3 | 3 | 3 |
| Solvent | xylene | 4.5 | 4.5 | 4.5 | 4.5 | 4.5 | 4.5 | 4.5 | 4.5 | 4.5 | 4.5 | 4.5 | 4.5 | 4.5 | 4.5 |
| | 1-butanol | 3 | 3 | 3 | 3 | 3 | 3 | 3 | 3 | 3 | 3 | 3 | 3 | 3 | 3 |
| Total | | 100 | 100 | 100 | 100 | 100 | 100 | 100 | 100 | 100 | 100 | 100 | 100 | 100 | 100 |
| Test Example 1 Rotary Test | average coating film dissolution amount | AA | AA | AA | A | AA | AA | AA | A | AA | AA | AA | AA | AA | AA |
| | coating film condition after 24 months | A | AA | AA | AA | AA | AA | AA | A | A | AA | AA | AA | AA | AA |
| Test Example 2 Antifouling Test | 18 months later | AA | AA | AA | AA | AA | AA | AA | AA | AA | AA | AA | AA | AA | AA |
| | 36 months later | A | AA | AA | AA | AA | AA | AA | A | A | AA | AA | AA | AA | AA |

**[Table 7]**

| Table 7 | | Example | | | | | | | | | | | | | |
|---|---|---|---|---|---|---|---|---|---|---|---|---|---|---|---|
| | | 43 | 44 | 45 | 46 | 47 | 48 | 49 | 50 | 51 | 52 | 53 | 54 | 55 | 56 |
| Copolymer A | copolymer solution A-1 | 25 | 25 | 25 | 25 | 25 | 25 | 25 | 25 | 25 | 25 | 25 | 25 | 25 | 25 |
| Ester compound C | UL-80 | 1.5 | | | | | | | | | | | | | |
| | UL-100 | | 1.5 | | | | | | | | | | | | |
| | TMPIB | | | 1.5 | | | | | | | | | | | |
| | CHMEH | | | | 1.5 | | | | | | | | | | |
| | HDOA | | | | | 1.5 | | | | | | | | | |
| | P-1783 | | | | | | 1.5 | | | | | | | | |
| | DEGDB | | | | | | | 1.5 | | | | | | | |
| | DPGDB | | | | | | | | 1.5 | | | | | | |
| | TAAG | | | | | | | | | 1.5 | | | | | |
| | TBAG | | | | | | | | | | 1.5 | | | | |
| | TEHAG | | | | | | | | | | | 1.5 | | | |
| | TOAG | | | | | | | | | | | | 1.5 | | |
| | E-2000H | | | | | | | | | | | | | 1.5 | |
| | E-9000H | | | | | | | | | | | | | | 1.5 |
| Antifouling agent D | cuprous oxide | 45 | 45 | 45 | 45 | 45 | 45 | 45 | 45 | 45 | 45 | 45 | 45 | 45 | 45 |
| | copper pvrithione | 3 | 3 | 3 | 3 | 3 | 3 | 3 | 3 | 3 | 3 | 3 | 3 | 3 | 3 |
| Release modifier | hydrogenated rosin zinc salt solution | 3 | 3 | 3 | 3 | 3 | 3 | 3 | 3 | 3 | 3 | 3 | 3 | 3 | 3 |
| | sum rosin zinc salt solution | 3 | 3 | 3 | 3 | 3 | 3 | 3 | 3 | 3 | 3 | 3 | 3 | 3 | 3 |
| Pigment | red iron oxide | 2 | 2 | 2 | 2 | 2 | 2 | 2 | 2 | 2 | 2 | 2 | 2 | 2 | 2 |
| | talc | 2 | 2 | 2 | 2 | 2 | 2 | 2 | 2 | 2 | 2 | 2 | 2 | 2 | 2 |
| | zinc oxide | 4 | 4 | 4 | 4 | 4 | 4 | 4 | 4 | 4 | 4 | 4 | 4 | 4 | 4 |
| | titanium oxide | 1 | 1 | 1 | 1 | 1 | 1 | 1 | 1 | 1 | 1 | 1 | 1 | 1 | 1 |
| Other additives | Disparlon A603-20X | 3 | 3 | 3 | 3 | 3 | 3 | 3 | 3 | 3 | 3 | 3 | 3 | 3 | 3 |
| Solvent | xylene | 4.5 | 4.5 | 4.5 | 4.5 | 4.5 | 4.5 | 4.5 | 4.5 | 4.5 | 4.5 | 4.5 | 4.5 | 4.5 | 4.5 |
| | 1-butanol | 3 | 3 | 3 | 3 | 3 | 3 | 3 | 3 | 3 | 3 | 3 | 3 | 3 | 3 |
| Total | | 100 | 100 | 100 | 100 | 100 | 100 | 100 | 100 | 100 | 100 | 100 | 100 | 100 | 100 |
| Test Example 1 Rotary Test | average coating film dissolution amount | AA | AA | A | AA | AA | AA | AA | AA | AA | AA | AA | AA | AA | AA |
| | coating film condition after 24 months | AA | AA | A | AA | A | AA | AA | AA | A | AA | AA | AA | AA | AA |
| Test Example 2 Antifouling Test | 18 months later | AA | AA | AA | AA | AA | AA | AA | AA | AA | AA | AA | AA | AA | AA |
| | 36 months later | AA | AA | A | AA | A | AA | AA | AA | A | A | AA | AA | AA | AA |

**[Table 8]**

| Table 8 | | Comparative Example | | | | | | | | | | | | | | | |
|---|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 | 15 | 16 |
| Copolymer a | copolymer solution A-1 | 25 | 25 | 25 | 25 | 25 | 25 | | | | | | | | | | |
| Other additives | copolymer solution B-1 | | | | | | | 25 | 25 | 25 | 25 | 25 | 25 | 25 | 25 | 25 | 25 |
| | tricresyl phosphate | | 1.5 | | | | | | | | | | | | | | |
| | lutonalA-25 | | | 1.5 | | | | | | | | | | | | | |
| | PEG400 | | | | 1.5 | | | | | | | | | | | | |
| | polybutene | | | | | 1.5 | | | | | | | | | | | |
| | liquid paraffin | | | | | | 1.5 | | | | | | | | | | |
| Ester compound C | MISAG | | | | | | | 1.5 | | | | | | | | | |
| | AADBE | | | | | | | | 1.5 | | | | | | | | |
| | E-PO | | | | | | | | | 1.5 | | | | | | | |
| | BPBG | | | | | | | | | | 1.5 | | | | | | |
| | TECA | | | | | | | | | | | 1.5 | | | | | |
| | TEHTM | | | | | | | | | | | | 1.5 | | | | |
| | UL-100 | | | | | | | | | | | | | 1.5 | | | |
| | TMPIB | | | | | | | | | | | | | | 1.5 | | |
| | DPGDB | | | | | | | | | | | | | | | 1.5 | |
| | E-2000H | | | | | | | | | | | | | | | | 1.5 |
| Antifouling agent D | cuprous oxide | 45 | 45 | 45 | 45 | 45 | 45 | 45 | 45 | 45 | 45 | 45 | 45 | 45 | 45 | 45 | 45 |
| | copper pvrithione | 3 | 3 | 3 | 3 | 3 | 3 | 3 | 3 | 3 | 3 | 3 | 3 | 3 | 3 | 3 | 3 |
| Release modifier | hydrogenated rosin zinc salt solution | 3 | 3 | 3 | 3 | 3 | 3 | 3 | 3 | 3 | 3 | 3 | 3 | 3 | 3 | 3 | 3 |
| | gum rosin zinc salt solution | 3 | 3 | 3 | 3 | 3 | 3 | 3 | 3 | 3 | 3 | 3 | 3 | 3 | 3 | 3 | 3 |
| Pigment | red iron oxide | 2 | 2 | 2 | 2 | 2 | 2 | 2 | 2 | 2 | 2 | 2 | 2 | 2 | 2 | 2 | 2 |
| | talc | 2 | 2 | 2 | 2 | 2 | 2 | 2 | 2 | 2 | 2 | 2 | 2 | 2 | 2 | 2 | 2 |
| | zinc oxide | 4 | 4 | 4 | 4 | 4 | 4 | 4 | 4 | 4 | 4 | 4 | 4 | 4 | 4 | 4 | 4 |
| | titanium oxide | 1 | 1 | 1 | 1 | 1 | 1 | 1 | 1 | 1 | 1 | 1 | 1 | 1 | 1 | 1 | 1 |
| Other additives | Disparlon A603-20X | 3 | 3 | 3 | 3 | 3 | 3 | 3 | 3 | 3 | 3 | 3 | 3 | 3 | 3 | 3 | 3 |
| Solvent | xylene | 6 | 4.5 | 4.5 | 4.5 | 4.5 | 4.5 | 4.5 | 4.5 | 4.5 | 4.5 | 4.5 | 4.5 | 4.5 | 4.5 | 4.5 | 4.5 |
| | 1-butanol | 3 | 3 | 3 | 3 | 3 | 3 | 3 | 3 | 3 | 3 | 3 | 3 | 3 | 3 | 3 | 3 |
| Total | | 100 | 100 | 100 | 100 | 100 | 100 | 100 | 100 | 100 | 100 | 100 | 100 | 100 | 100 | 100 | 100 |
| Test Example 1 Rotary Test | average coating film dissolution amount | C | B | D | F | C | B | F | B | F | B | F | B | A | D | B | A |
| | coating film condition after 24 months | C | C | D | F | C | C | F | C | F | C | F | C | C | D | C | C |
| Test Example 2 Antifouling Test | 18 months later | A | A | A | F | A | A | F | A | F | A | F | A | A | A | A | A |
| | 36 months later | C | C | C | F | C | C | F | B | F | C | F | C | C | C | C | C |

**[Table 9]**

| Table 9 | | Example | | | | | | |
|---|---|---|---|---|---|---|---|---|
| | | 57 | 58 | 59 | 60 | 61 | 62 | 63 |
| Copolymer A | copolymer solution A-1 | 25 | 20 | 20 | 20 | 20 | | |
| | copolymer solution A-2 | | | | | | 25 | 25 |
| Ester compound C | E-6000 | 0.5 | | | | | | |
| | AADBE | | 1 | | | | | |
| | DOS | | | | 1 | | | |
| | DINCH | | | | | 1 | | |
| | DIDP | | | | | 0.5 | | |
| | BPBG | 1 | | | | 0.5 | 1.5 | |
| | p-PAEH | | | | 1 | 1 | | 1.5 |
| | BTHC | | 1.5 | | | | | |
| | UL-100 | | 1 | | 1 | | | |
| | DPGDB | | | 1.5 | | 0.5 | | |
| | E-9000H | | | | 0.5 | | | |
| Antifouling agent D | cuprous oxide | 45 | 35 | 35 | | | 45 | 45 |
| | copper pyrithione | 3 | 2 | 1 | | 1 | 3 | 3 |
| | Sea Nine | | | 1 | | 1 | | |
| | Zineb | | | 1 | | 1 | | |
| | zinc pyrithione | | | | 5 | 4 | | |
| | ECONEA 028 | | | 1 | 7 | 4 | | |
| | medetomidine | | | 1 | | 1 | | |
| Release modifier | hydrogenated rosin zinc salt solution | 1 | 2 | 2 | 10 | 10 | 3 | 3 |
| | gum rosin zinc salt solution | 1 | 2 | 2 | 5 | 5 | 3 | 3 |
| | hydrogenated rosin solution | 2 | 3 | 3 | | | | |
| | gum rosin solution | 2 | 3 | 3 | 5 | 5 | | |
| Pigment | red iron oxide | 2 | 3 | 3 | 8 | 8 | 2 | 2 |
| | talc | 2 | 3 | 3 | 5 | 5 | 2 | 2 |
| | zinc oxide | 4 | 9 | 9 | 20 | 20 | 4 | 4 |
| | titanium oxide | 1 | 1 | 1 | 1 | 1 | 1 | 1 |
| Other additives | Disparlon A603-20X | 3 | 3 | 3 | 3 | 3 | 3 | 3 |
| Solvent | xylene | 3 | 4.5 | 3.5 | 4.5 | 4.5 | 4.5 | 4.5 |
| | 1-butanol | 1.5 | 3 | 3 | 3 | 3 | 3 | 3 |
| | denatured alcohol | 3 | 3 | 3 | | | | |
| Total | | 100 | 100 | 100 | 100 | 100 | 100 | 100 |
| Test Example 1 Rotary Test | average coating film dissolution amount | AA | AA | AA | AA | B | AA | AA |
| | coating film condition after 24 months | AA | AA | AA | A | A | AA | AA |
| Test Example 2 Antifouling Test | 18 months later | AA | AA | AA | AA | AA | AA | AA |
| | 36 months later | AA | A | AA | A | A | AA | AA |

**[Table 10]**

| Table 10 | | Example | | | | | | |
|---|---|---|---|---|---|---|---|---|
| | | 64 | 65 | 66 | 67 | 68 | 69 | 70 |
| Copolymer A | copolymer solution A-2 | 25 | | | | | | |
| | copolymer solution A-3 | | 25 | 25 | 25 | | | |
| | copolymer solution A-4 | | | | | 25 | 25 | 25 |
| Ester compound C | AADBE | | 1.5 | | | | | |
| | DINCH | | | 1.5 | | | | |
| | DIDP | | | | | 1.5 | | |
| | m-PAEH | | | | | | 1.5 | |
| | UL-100 | | | | 1.5 | | | |
| | DPGDB | | | | | | | 1.5 |
| | TEHAG | 1.5 | | | | | | |
| Antifouling agent D | cuprous oxide | 45 | 45 | 45 | 45 | 45 | 45 | 45 |
| | copper pyrithione | 3 | 3 | 3 | 3 | 3 | 3 | 3 |
| Release modifier | hydrogenated rosin zinc salt solution | 3 | 3 | 3 | 3 | 3 | 3 | 3 |
| | gum rosin zinc salt solution | 3 | 3 | 3 | 3 | 3 | 3 | 3 |
| Pigment | red iron oxide | 2 | 2 | 2 | 2 | 2 | 2 | 2 |
| | talc | 2 | 2 | 2 | 2 | 2 | 2 | 2 |
| | zinc oxide | 4 | 4 | 4 | 4 | 4 | 4 | 4 |
| | titanium oxide | 1 | 1 | 1 | 1 | 1 | 1 | 1 |
| Other additives | Disparlon A603-20X | 3 | 3 | 3 | 3 | 3 | 3 | 3 |
| Solvent | xylene | 4.5 | 4.5 | 4.5 | 4.5 | 4.5 | 4.5 | 4.5 |
| | 1-butanol | 3 | 3 | 3 | 3 | 3 | 3 | 3 |
| Total \| | | 100 | 100 | 100 \| | 100 \| | 100 | 100 | 100 |
| Test Example 1 Rotary Test | average coating film dissolution amount | AA | A | AA | AA | AA | AA | AA |
| | coating film condition after 24 months | AA | A | A | A | AA | AA | AA |
| Test Example 2 Antifouling Test | 18 months later | AA | AA | AA | AA | AA | AA | AA |
| | 36 months later | AA | A | A | A | AA | AA | AA |

**[Table 11]**

| Table 11 | | Example | | | | | |
|---|---|---|---|---|---|---|---|
| | | 71 | 72 | 73 | 74 | 75 | 76 |
| Copolymer A | copolymer solution A-1 | | | | 10 | | |
| | copolymer solution A-2 | | | | 15 | 15 | |
| | copolymer solution A-3 | | | | | | 10 |
| | copolymer solution A-4 | | | | | 15 | 10 |
| | copolymer solution A-5 | 25 | 25 | 25 | | | 10 |
| Ester compound C | E-6000 | 1.5 | | | | 0.5 | |
| | DOS | | | | | | 0.5 |
| | DINCH | | | | | 0.5 | |
| | DINP | | | | | 0.5 | |
| | DIDP | | | | | | 0.5 |
| | BPBG | | | | 0.5 | | |
| | m-PAEH | | | | 0.5 | | |
| | p-PAEH | | | | | | 0.5 |
| | BTHC | | | | | 0.5 | |
| | TEHACA | | 1.5 | | | | |
| | UL-100 | | | | | 0.5 | |
| | P-1783 | | | | | | 0.5 |
| | E-2000H | | | | 0.5 | | |
| | E-9000H | | | 1.5 | | | |
| Antifouling agent D | cuprous oxide | 45 | 45 | 45 | 45 | 35 | 25 |
| | copper pyrithione | 3 | 3 | 3 | 3 | 2 | 0.5 |
| | Sea Nine | | | | | | 0.5 |
| | Zineb | | | | | | 0.5 |
| Release modifier | hydrogenated rosin zinc salt solution | 3 | 3 | 3 | 3 | 5 | 5 |
| | gum rosin zinc salt solution | 3 | 3 | 3 | 1 | 1 | 5 |
| | gum rosin solution | | | | 2 | 2 | 5 |
| Pigment | red iron oxide | 2 | 2 | 2 | 2 | 2 | 5 |
| | talc | 2 | 2 | 2 | 2 | 2 | 3 |
| | zinc oxide | 4 | 4 | 4 | 4 | 7 | 7 |
| | titanium oxide | 1 | 1 | 1 | 1 | 1 | 1 |
| Other additives \| | Disparlon A603-20X \| | 3 | 3 | 3 | 3 | 3 | 3 |
| Solvent | xylene | 4.5 | 4.5 | 4.5 | 4.5 | 4.5 | 4.5 |
| | 1-butanol | 3 | 3 | 3 | 1.5 | 3 | 1.5 |
| | denatured alcohol | | | | 1.5 | | 1.5 |
| Total \| | | 100 \| | 100 \| | 100 | \| 100 \| | 100 \| | 100 |
| Test Example 1 Rotary Test | average coating film dissolution amount | A | AA | AA | AA | AA | AA |
| | coating film condition after 24 months | A | A | A | AA | AA | A |
| Test Example 2 Antifouling Test | 18 months later | AA | AA | AA | AA | AA | AA |
| | 36 months later | A | A | A | AA | A | A |

**[Table 12]**

| Table 12 | | Example | | | | | |
|---|---|---|---|---|---|---|---|
| | | 77 | 78 | 79 | 80 | 81 | 82 |
| Copolymer A | copolymer solution A-1 | 5 | | 5 | | | |
| | copolymer solution A-2 | 10 | 10 | 5 | 10 | 15 | 15 |
| | copolymer solution A-3 | | 5 | | | | |
| | copolymer solution A-4 | 5 | 5 | 10 | 10 | 5 | 5 |
| | copolymer solution A-5 | | 5 | | 5 | | |
| Ester compound C | E-6000 | | | 0.5 | | | 0.5 |
| | AADBE | 1 | 0.5 | | | 0.5 | |
| | DOS | | | 0.5 | | | |
| | DINCH | | 0.5 | | | 0.5 | 0.5 |
| | E-PO | | | 0.5 | | | 0.5 |
| | DINP | | | | 0.5 | | 0.5 |
| | DIDP | | | | | 0.5 | |
| | BPBG | | | 0.5 | | | |
| | m-PAEH | | 0.5 | | | | |
| | p-PAEH | 1 | | | | 0.5 | |
| | BTHC | | | 0.5 | | | |
| | TEHACA | 0.5 | | 0.5 | | | |
| | TEHTM | 0.5 | | | 0.5 | | |
| | UL-100 | | | 0.5 | | | 0.5 |
| | P-1783 | | 0.5 | | | 0.5 | |
| | DPGDB | | | 0.5 | | 0.5 | |
| | TEHAG | 0.5 | | | | 0.5 | |
| | E-2000H | | | | 0.5 | | 0.5 |
| | E-9000H | 1 | | | | | 0.5 |
| Antifouling agent D | cuprous oxide | 25 | 20 | 20 | 43 | | |
| | copper pyrithione | 1.5 | 1.5 | 1.5 | 1 | | 1 |
| | Sea Nine | 1.5 | 1.5 | 1.5 | 1 | | 1 |
| | Zineb | | | | 1 | | 1 |
| | zinc pyrithione | | | | | 5 | 4 |
| | ECONEA 028 | | 1.5 | | 1 | 7 | 4 |
| | medetomidine | | | 1.5 | 1 | | 1 |
| Release modifier | hydrogenated rosin zinc salt solution | 7 | 7 | 5 | 3 | 10 | 10 |
| | gum rosin zinc salt solution | 5 | 5 | 5 | 1 | 5 | 5 |
| | gum rosin solution | 5 | 5 | 5 | 2 | 5 | 5 |
| Pigment | red iron oxide | 5 | 5 | 5 | 2 | 8 | 8 |
| | talc | 5 | 5 | 5 | 2 | 5 | 5 |
| | zinc oxide | 9 | 10 | 15 | 4 | 20 | 20 |
| | titanium oxide | 1 | 1 | 1 | 1 | 1 | 1 |
| Other additives \| | Disparlon A603-20X | 3 | 3 | 3 | 3 | \| 3 | 3 |
| Solvent | xylene | 4.5 | 4.5 | 4.5 | 4.5 | 4.5 | 4.5 |
| | 1-butanol | 3 | 3 | 3 | 3 | 3 | 3 |
| Total | | 100 | 100 | 100 | 100 | 100 | 100 |
| Test Example 1 Rotary Test | average coating film dissolution amount | AA | AA | AA | AA | AA | AA |
| | coating film condition after 24 months | A | A | A | AA | A | A |
| Test Example 2 Antifouling Test | 18 months later | AA | AA | A | AA | AA | AA |
| | 36 months later | A | A | A | AA | A | A |

**[Table 13]**

| Table 13 | | Example | | | | | | | | |
|---|---|---|---|---|---|---|---|---|---|---|
| | | 83 | 84 | 85 | 86 | 87 | 88 | 89 | 90 | 91 |
| Copolymer A | copolymer solution A-4 | 25 | 23 | 20 | 20 | 20 | 20 | 20 | 20 | 20 |
| Ester compound C | E-6000 | 0.5 | | | | | | 0.5 | | |
| | AADBE | 0.5 | 0.5 | 0.5 | | | | | 0.5 | |
| | DOS | | 0.5 | | | 0.5 | | 0.5 | | 0.5 |
| | DINCH | | | 0.5 | 0.5 | 0.5 | 0.5 | | 0.5 | 0.5 |
| | E-PO | | 0.5 | 0.5 | | | | 0.5 | | |
| | DINP | 0.5 | | | 0.5 | 0.5 | 0.5 | | 0.5 | |
| | DIDP | | 0.5 | 0.5 | | | | 0.5 | | 0.5 |
| | BPBG | 0.5 | | | 0.5 | 0.5 | | 0.5 | | |
| | m-PAEH | | | 0.5 | | | 0.5 | | 0.5 | |
| | p-PAEH | | 0.5 | | 0.5 | 0.5 | | 0.5 | | 0.5 |
| | BTHC | | | 0.5 | | | | | 0.5 | |
| | TEHACA | 0.5 | | | 0.5 | | 0.5 | | | 0.5 |
| | TEHTM | | 0.5 | | | 0.5 | | 0.5 | | |
| | UL-100 | 0.5 | | | 0.5 | | | | 0.5 | |
| | P-1783 | | 0.5 | | | 0.5 | | 0.5 | | 0.5 |
| | DPGDB | 0.5 | | | | | 0.5 | | | 0.5 |
| | TEHAG | | | | | 0.5 | | | | |
| | E-2000H | | 0.5 | | | | 0.5 | | | |
| | E-9000H | | | | | | | | | 0.5 |
| Antifouling agent D | cuprous oxide | 43 | 35 | 30 | 30 | | | | | |
| | copper rhodanide | | | | | 35 | | | | |
| | Diuron | 1 | | | | | | | | |
| | copper pyrithione | | 5 | 1 | | | 7 | 5 | | |
| | Sea Nine | 1 | 0.5 | | | 1 | | | 2 | |
| | Zineb | | 2 | | | | | | | |
| | zinc pyrithione | | | | | 2 | | | 7 | 7 |
| | ECONEA 028 | | | | | 1 | | 2 | | 1 |
| | medetomidine | 0.1 | 0.1 | 0.1 | 0.2 | | 0.2 | 0.1 | 0.1 | 0.1 |
| Release modifier | hydrogenated rosin zinc salt solution | 3 | 3 | 5 | 5 | 3 | 10 | 10 | 10 | 10 |
| | gum rosin zinc salt solution | 1 | 2 | 5 | 5 | 2 | 7 | 7 | 7 | 7 |
| | gum rosin solution | 2 | 2 | 5 | 5 | 2 | 5 | 5 | 5 | 5 |
| Pigment | red iron oxide | 2 | 3 | 3 | 3 | 3 | 8 | 8 | 8 | 8 |
| | talc | 2 | 3 | 3 | 3 | 3 | 5 | 5 | 5 | 5 |
| | zinc oxide | 4 | 5 | 12 | 12 | 12 | 20 | 20 | 20 | 20 |
| | titanium oxide | 1 | 1 | 1 | 1 | 1 | 2 | 2 | 1 | 1 |
| Other additives | Disparlon A603-20X | 3 | 3 | 3 | 3 | 3 | 3 | 3 | 3 | 3 |
| | tetraethoxysilane | 0.5 | 0.5 | 0.5 | 0.5 | 0.5 | 0.5 | 0.5 | 0.5 | 0.5 |
| | tricresyl phosphate | 1 | 1 | 1 | 1 | 1 | 1 | 1 | 1 | 1 |
| Solvent | xylene | 3.9 | 3.9 | 4.4 | 5.3 | 3.5 | 5.3 | 4.4 | 4.4 | 4.4 |
| | 1-butanol | 2 | 2 | 2 | 2 | 2 | 2 | 2 | 2 | 2 |
| | propylene glycol monomethyl ether | 1 | 1 | 1 | 1 | 1 | 1 | 1 | 1 | 1 |
| Total | | 100 | 100 | 100 | 100 | 100 | 100 | 100 | 100 | 100 |
| Test Example 1 Rotary Test | average coating film dissolution amount | A | A | A | A | A | AA | AA | AA | AA |
| | coating film condition after 24 months | AA | AA | AA | AA | AA | A | A | A | A |
| Test Example 2 Antifouling Test | 18 months later | AA | AA | AA | AA | AA | AA | AA | AA | AA |
| | 36 months later | AA | AA | AA | A | A | A | A | A | A |

The details of the components in the table are as follows.

### <Ester Compound C>

### <<Ester Compound (3)>>

DAD: decyl decanoate: product name "Decyl Decanoate" (manufactured by Tokyo Chemical Industry Co., Ltd.)
PAiPr: isopropyl palmitate: product name "Isopropyl Palmitate" (manufactured by Tokyo Chemical Industry Co., Ltd.)
MENTA: menthyl acetate: product name "(-)-Menthyl Acetate" (manufactured by Tokyo Chemical Industry Co., Ltd.)
i-BoAc: isobornyl acetate: product name "Isobornyl Acetate" (manufactured by Tokyo Chemical Industry Co., Ltd.)
LAHD: hexadecyl lactate: product name "Hexadecyl Lactate" (manufactured by Tokyo Chemical Industry Co., Ltd.)
MISAG: glycerol monoisostearate: product name "Glycerol monoisostearate" (manufactured by Wako Pure Chemical Industries, Ltd.)
ARAM: methyl acetylricinoleate: product name "Methyl O-Acetylricinoleate" (manufactured by Tokyo Chemical Industry Co., Ltd.)
DHJAM: methyl dihydrojasmonate: product name "Methyl Dihydrojasmonate" (manufactured by Tokyo Chemical Industry Co., Ltd.)
E-6000: epoxidized fatty acid 2-ethylhexyl: product name "SANSOCIZER E-6000" (manufactured by New Japan Chemical Co., Ltd.)
ECHECH: 3,4-epoxycyclohexylmethyl 3,4-epoxycyclohexanecarboxylate: product name "3,4-epoxycyclohexylmethyl 3',4'-epoxycyclohexanecarboxylate" (manufactured by Wako Pure Chemical Industries, Ltd.)
PATHF: tetrahydrofurfuryl propionate: product name "Tetrahydrofurfuryl Propionate" (manufactured by Tokyo Chemical Industry Co., Ltd.)
BAEH: 2-ethylhexyl benzoate: product name "2-Ethylhexyl Benzoate" (manufactured by Tokyo Chemical Industry Co., Ltd.)
n-OFA: n-octyl 2-furancarboxylate: product name "n-Octyl 2-Furancarboxylate" (manufactured by Tokyo Chemical Industry Co., Ltd.)
MPhGAE: ethyl 3-methyl-3-phenylglycidate: product name "Ethyl 3-Methyl-3-phenylglycidate" (manufactured by Tokyo Chemical Industry Co., Ltd.)

### <<Ester Compound (4)>>

AADBE: di-2-butoxyethyl adipate: product name "Bis(2-butoxyethyl) Adipate" (manufactured by Tokyo Chemical Industry Co., Ltd.)
AAEH: di-2-ethylhexyl adipate: product name "Bis(2-ethylhexyl) Adipate" (manufactured by Tokyo Chemical Industry Co., Ltd.)
AADiN: diisononyl adipate: product name "diisononyl adipate" (manufactured by Wako Pure Chemical Industries, Ltd.)
AADiD: diisodecyl adipate: product name "diisodecyl adipate" (manufactured by Wako Pure Chemical Industries, Ltd.)
AzAEH: di-2-ethylhexyl azelate: product name "Bis(2-ethylhexyl) Azelate" (manufactured by Tokyo Chemical Industry Co., Ltd.)
DOS: di-2-ethylhexyl sebacate: product name "SANSOCIZERDOS" (manufactured by New Japan Chemical Co., Ltd.)
DECH: diethyl 1,1-cyclohexanedicarboxylate: product name "Diethyl 1,1-Cyclohexanedicarboxylate" (manufactured by Tokyo Chemical Industry Co., Ltd.)
DGCH: diglycidyl 1,2-cyclohexanedicarboxylate: product name "Diglycidyl 1,2-Cyclohexanedicarboxylate" (manufactured by Tokyo Chemical Industry Co., Ltd.)
DMCDO: dimethyl 1,4-cyclohexanedione-2,5-dicarboxylate: product name "Dimethyl 1,4-Cyclohexanedione-2,5-dicarboxylate" (manufactured by Tokyo Chemical Industry Co., Ltd.)
DINCH: diisononyl 1,2-cyclohexanedicarboxylate: product name "HEXAMOLL (registered trademark) DINCH (registered trademark)" (manufactured by BASF)
DEHTH: di-2-ethylhexyl 4-cyclohexene-1,2-dicarboxylate: product name "SANSOCIZER DEHTH" (manufactured by New Japan Chemical Co., Ltd.)
E-PS: di-2-ethylhexyl 4,5-epoxycyclohexane-1,2-dicarboxylate: product name "SANSOCIZER E-PS" (manufactured by New Japan Chemical Co., Ltd.)
EP-18: distearyl 4,5-epoxycyclohexane-1,2-dicarboxylate: product name "RIKAFLOW EP-18" (manufactured by New Japan Chemical Co., Ltd.)
E-PO: diepoxystearyl 4,5-epoxycyclohexane-1,2-dicarboxylate: product name "SANSOCIZER E-PO" (manufactured by New Japan Chemical Co., Ltd.)
DEHP: di-2-ethylhexyl phthalate: product name "bis(2-ethylhexyl) phthalate" (manufactured by Wako Pure Chemical Industries, Ltd.)
DINP: diisononyl phthalate: product name "diisononyl phthalate" (manufactured by Wako Pure Chemical Industries, Ltd.)
DIDP: diisodecyl phthalate: product name "diisodecyl phthalate" (manufactured by Wako Pure Chemical Industries, Ltd.)
EPEG: ehyl phthalyl ethyl glycolate: product name "Ethyl Phthalyl Ethyl Glycolate" (manufactured by Tokyo Chemical Industry Co., Ltd.)
BPBG: butyl phthalyl butyl glycolate: product name "Butyl Phthalyl Butyl Glycolate" (manufactured by Tokyo Chemical Industry Co., Ltd.)
m-PAEH: di-2-ethylhexyl isophthalate: product name "Bis(2-ethylhexyl) Isophthalate" (manufactured by Tokyo Chemical Industry Co., Ltd.)
p-PAEH: di-2-ethylhexyl terephthalate: product name "Bis(2-ethylhexyl) terephthalate" (manufactured by SIGMA-ALDRICH)

### <<Ester Compound (5)>>

TECA: triethyl citrate: product name "Triethyl Citrate" (manufactured by Tokyo Chemical Industry Co., Ltd.)
TEACA: triethyl acetylcitrate: product name "Triethyl O-Acetylcitrate" (manufactured by Tokyo Chemical Industry Co., Ltd.)
TBACA: tributyl acetylcitrate: product name "Tributyl O-Acetylcitrate" (manufactured by Tokyo Chemical Industry Co., Ltd.)
TEHACA: 2-ethylhexyl acetylcitrate: product name "CITROFOL (registered trademark) AHII" (manufactured by Jungbunzlauer Suisse AG)
BTHC: trihexyl butyrylcitrate: product name "Trihexyl 0-Butyrylcitrate" (manufactured by Tokyo Chemical Industry Co., Ltd.)
TEHTM: tri-2-ethylhexyl trimellitate: product name "Tris(2-ethylhexyl) Trimellitate" (manufactured by Tokyo Chemical Industry Co., Ltd.)
TiNTM: triisononyl trimellitate: product name "ADEKA CIZER C-9N" (manufactured by ADEKA Corporation)

### <<Ester Compound (6)>>

UL-80: tetra-2-ethylhexyl pyromellitate: product name "ADEKA CIZER UL-80" (manufactured by ADEKA Corporation)
UL-100: pyromellitic acid mixed linear alkyl ester: product name "ADEKA CIZER L-100" (manufactured by ADEKA Corporation)

### <<Ester Compound (7)>>

TMPIB: 2,2,4-trimethyl-1,3-pentanediol diisobutyrate: product name "2,2,4-Trimethyl-1,3-pentanediol Diisobutyrate" (manufactured by Tokyo Chemical Industry Co., Ltd.)
CHMEH: 1,4-cyclohexanedimethanol bis(2-ethylhexanoate)
HDOA: 1,6-hexanediol diacetate: product name "1,6-Diacetoxyhexane" (manufactured by Tokyo Chemical Industry Co., Ltd.)
P-1783: triethylene glycol di(2-ethylhexanoate): product name "Proviplast 1783" (manufactured by Sanko Co., Ltd.)
DEGDB: diethylene glycol dibenzoate: product name "Diethylene Glycol Dibenzoate" (manufactured by Tokyo Chemical Industry Co., Ltd.)
DPGDB: dipropylene glycol dibenzoate: product name "Di(propylene glycol) dibenzoate" (manufactured by Sigma-Aldrich)

### <<Ester Compound (8)>>

TAAG: glycerol triacetate: product name "Triacetin" (manufactured by Tokyo Chemical Industry Co., Ltd.)
TBAG: glycerol tributyrate: product name "Tributyrin" (manufactured by Wako Pure Chemical Industries, Ltd.)
TEHAG: glycerol tris(2-ethylhexanoic acid): product name "glycerol tris(2-ethylhexanoic acid)" (manufactured by Wako Pure Chemical Industries, Ltd.)
TOAG: glyceryl trioleate: product name "Glyceryl trioleate" (manufactured by Sigma-Aldrich)
E-2000H: epoxidized soybean oil: product name "SANSOCIZER E-2000H" (manufactured by New Japan Chemical Co., Ltd.)
E-9000H: epoxidized linseed oil: product name "SANSOCIZER E-9000H" (manufactured by New Japan Chemical Co., Ltd.)

### <Antifouling Agent D>

Cuprous oxide: product name "NC-301" (manufactured by Nissin Chemco Ltd.)
Copper pyrithione: product name "Copper Omadine" (manufactured by Lonza Group AG)
Sea Nine: product name "SEA-NINE 211", 4,5-dichloro-2-octyl-4-isothiazolin-3-one (manufactured by Rohm & Haas), active ingredient 30% xylene solution
Zineb: [ethylenebis(dithiocarbamate)] zinc (manufactured by Ouchi Shinko Chemical Industrial Co., Ltd.)
Zinc pyrithione: (manufactured by Lonza Group AG)
Econea 028: product name "Econea 028" 2-(p-chlorophenyl)-3-cyano-4-bromo-5-trifluoromethylpyrrole (manufactured by Janssen PMP)
Medetomidine: (±)-4-[1-(2,3-dimethylphenyl)ethyl]-1H-imidazole (manufactured by Wako Pure Chemical Industries, Ltd.)
Copper rhodanide: copper thiocyanate (manufactured by Nippon Kagaku Sangyo Co., Ltd.)
Diuron: product name "Diuron" (manufactured by Tokyo Chemical Industry Co., Ltd.)

### <Release Modifier>

Hydrogenated rosin zinc salt solution: solution produced in Production Example D4 was used.
Gum rosin zinc salt solution: solution produced in Production Example D3 was used.
Gum rosin solution: solution produced in Production Example D1 was used.
Hydrogenated rosin solution: solution produced in Production Example D2 was used.

### <Pigment>

Red iron oxide: product name "BENGARA KINGYOKU" (manufactured by Morishita Red iron oxide Kogyo Co., Ltd.)
Talc: product name "Talc MS" (manufactured by Nippon Talc Co., Ltd.)
Zinc oxide: product name "Zinc Oxide (Type II)" (manufactured by Seido Chemical Industry Co., Ltd.)
Titanium oxide: product name "FR-41" (manufactured by Furukawa Co., Ltd.)

### <Other Additives>

Disparlon A603-20X: amide thixotropic agent, product name "Disparlon A603-20X" (manufactured by Kusumoto Chemicals, Ltd.)
Tricresyl phosphate: (manufactured by Daihachi Chemical Industry Co., Ltd.)
Lutonal A-25: alkyl vinyl ether polymer: (manufactured by BASF)
PEG400: polyethylene glycol: product name "Polyethylene Glycol400" (manufactured by Tokyo Chemical Industry Co., Ltd.)
Polybutene: product name "POLYBUTENE 0N" (manufactured by NOF Corporation)
Liquid paraffin: Moresco White P-100 (manufactured by Moresco Corporation)
Tetraethoxysilane: product name "Ethyl Silicate 28" (manufactured by Colcoat Co., Ltd.)

### <Solvent>

Denatured alcohol: product name "Clean Ace High" (manufactured by IMAZU CHEMICAL Co.,Ltd.)

### 3. Test

All the coating compositions of Examples and Comparative Examples were placed in a sealed container within 1 hour after production, left to stand for 30 days in a thermostatic chamber set at 50°C (accelerated deterioration treatment) before use. The coating materials treated as described above were subjected to the following tests. The evaluation results are shown in Tables 4 to 12.

All Comparative Examples did not show good results in any of the rotary test and the antifouling test, compared to Examples.

### <Test Example 1 (Rotary Test)>

A water tank was provided with, in the center thereof, a rotary drum having a diameter of 515 mm and a height of 440 mm, which was configured to be rotatable by a motor. The tank was also provided with a cooling apparatus for keeping the seawater temperature constant, and an automatic pH controller for keeping the seawater pH constant.

Test plates were prepared in accordance with the following method.

First, an anti-corrosion coating material (an epoxy vinyl A/C) was applied onto a titanium plate (71 × 100 × 0.5 mm) such that the thickness after drying was about 100 µm, and dried to form an anti-corrosion coating film. Thereafter, each of the coating compositions obtained in Examples and Comparative Examples was applied thereon such that the dry film thickness was about 450 µm, and dried at 40°C for 3 days to prepare a test plate.

The test plate thus prepared was fixed to the rotary drum of the rotating apparatus of the above equipment so as to be in contact with seawater, and the rotary drum was rotated at a speed of 20 knots. During the test, the temperature and the pH of the seawater were maintained at 25°C and at 8.0 to 8.2, respectively, and the seawater was replaced every two weeks.

The initial film thickness and remaining film thickness were measured at the initial stage and after 24 months after the start of the test for each of the testing plates using a shape measurement laser microscope VK-X100 manufactured by Keyence Corporation, and the dissolved coating film thickness was calculated from the difference between the two values to obtain the coating film dissolution amount per month (µm/month), and the coating film dissolubility was evaluated in accordance with the following criteria.

AA: The average dissolution amount per month (µm/month) was 5 µm or more and less than 10 µm, ideal dissolution amount.
A: The average dissolution amount per month (µm/month) was 2 µm or more and less than 5 µm, slightly small dissolution amount.
B: The average dissolution amount per month (µm/month) was 10 µm or more, slightly excessive dissolution.
C: The average dissolution amount per month (µm/month) was less than 2 µm, no dissolution at all.
D: Within 24 months, all coating films were dissolved or peeled off, apparently too much dissolved.
F: After accelerated deterioration treatment, problems such as thickening and gelation in coating materials occurred such that the test of the subject was impossible.

Further, when measuring the remaining film thickness after 24 months of the rotary test, the surface of each coating film was observed with naked eyes and a microscope to evaluate the surface condition of the coating film.

Evaluation of the coating film surface condition was made in accordance with the following criteria.
AA: No defects observed
A: Hairline cracks observed in less than 10% of the total surface area of the coating film
B: Hairline cracks observed in 10 to 30% of the total surface area of the coating film
C: Hairline cracks observed in 30% or more of the total surface area of the coating film
D: Coating film defects such as large cracks, blisters, or peel-offs (only the surface or a part of the edge of the coating film peels off), delamination (the entire coating film peels off, and no test coating film remains) observed
F: After accelerated deterioration treatment, problems such as thickening and gelation in coating materials occurred such that the test of the subject was impossible.

### <Test Example 2 (Antifouling Test)>

Each of the coating compositions obtained in Examples and Comparative Examples was applied onto both sides of a PVC plate (100 × 200 × 2 mm) such that the thickness of the dry coating film was about 300 µm. The resulting coated product was dried at room temperature (25°C) for 3 days to prepare a test plate with a dry coating film having a thickness of about 300 µm. The test plate was immersed 1.5 m below sea level in Owase City, Mie Prefecture, Japan, and fouling of the test plates by adhered materials was observed after 18 months and 36 months.

Evaluation was made in accordance with the following criteria by visual observation of the surface condition of the coating films.
AA: No fouling organisms such as shellfish and algae adhered, and almost no slime
A: No fouling organisms such as shellfish and algae adhered, and slime thinly adhered (to the extent that the coating film surface was visible) but removable by lightly wiping with a brush
B: No fouling organisms such as shellfish and algae adhered, and slime adhered thickly to the extent that the coating film surface was not visible and not removable even by strong wiping with a brush
C: Fouling organisms such as shellfish and algae adhered
F: After accelerated deterioration treatment, problems such as thickening and gelation in coating materials occurred such that the test of the subject was impossible.

## Claims

1. An antifouling coating composition comprising:
a copolymer A;
an ester compound C; and
an antifouling agent D,
wherein the copolymer A is a copolymer of a monomer (a) represented by general formula (1) and an ethylenically unsaturated monomer (b) other than the monomer (a), and the monomer (a) comprises a compound represented by general formula (1) in which n is 2 or more; and
the ester compound C comprises at least one ester compound represented by chemical formulas (3) to (8), 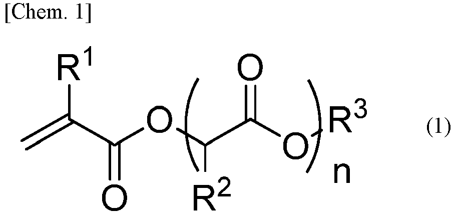
wherein R¹ represents hydrogen or a methyl group, R² represents hydrogen, a methyl group, or a phenyl group, R³ is an alkyl group having 1 to 8 carbon atoms optionally substituted with an alkoxy group having 1 to 8 carbon atoms or a phenyl group, or represents a phenyl group, and n represents an integer of 1 to 10, 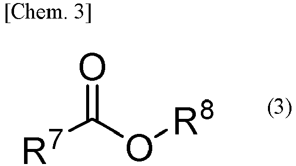
wherein R⁷ and R⁸ are each a hydrocarbon group having 1 to 25 carbon atoms optionally containing a heteroatom, where the hydrocarbon group is aliphatic or aromatic, linear or branched, or have a cyclic structure, 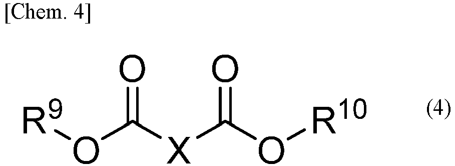
wherein X is a hydrocarbon group having 1 to 25 carbon atoms optionally containing a heteroatom, R⁹ and R¹⁰ are each a hydrocarbon group having 1 to 25 carbon atoms optionally containing a heteroatom, where the hydrocarbon groups of X and R⁹ to R¹⁰ are each aliphatic or aromatic, linear or branched, or have a cyclic structure, 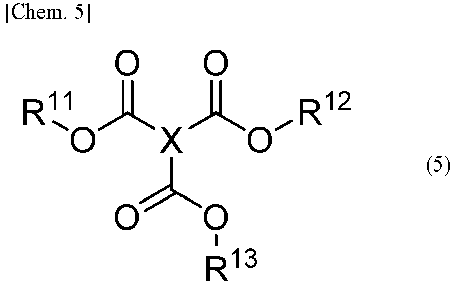
wherein X is a hydrocarbon group having 1 to 25 carbon atoms optionally containing a heteroatom, R¹¹ to R¹³ are each a hydrocarbon group having 1 to 25 carbon atoms optionally containing a heteroatom, where the hydrocarbon groups of X and R¹¹ to R¹³ are each aliphatic or aromatic, linear or branched, or have a cyclic structure, 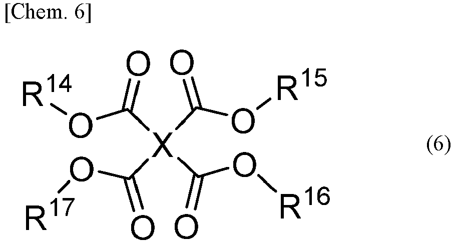
wherein X is a hydrocarbon group having 1 to 25 carbon atoms optionally containing a heteroatom, R¹⁴ to R¹⁷ are each a hydrocarbon group having 1 to 25 carbon atoms optionally containing a heteroatom, where the hydrocarbon groups of X and R¹⁴ to R¹⁷ are each aliphatic or aromatic, linear or branched, or have a cyclic structure, 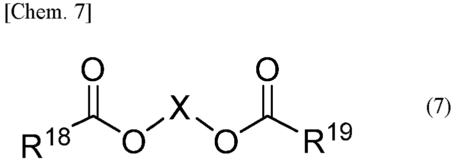
wherein X is a hydrocarbon group having 1 to 25 carbon atoms optionally containing a heteroatom, R¹⁸ to R¹⁹ are each a hydrocarbon group having 1 to 25 carbon atoms optionally containing a heteroatom, where the hydrocarbon groups of X and R¹⁸ to R¹⁹ are each aliphatic or aromatic, linear or branched, or have a cyclic structure, and 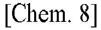 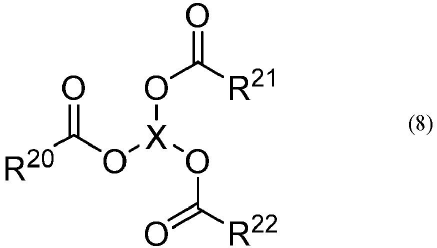
wherein X is a hydrocarbon group having 1 to 25 carbon atoms optionally containing a heteroatom, R²⁰ to R²² are each a hydrocarbon group having 1 to 25 carbon atoms optionally containing a heteroatom, where the hydrocarbon groups of X and R²⁰ to R²² are each aliphatic or aromatic, linear or branched, or have a cyclic structure.

2. The antifouling coating composition of Claim 1, wherein the ester compound C comprises an ester compound represented by the chemical formulas (4) to (6).

3. The antifouling coating composition of Claim 2, wherein the hydrocarbon group of X in the chemical formulas (4) to (6) has a cyclic structure.

4. The antifouling coating composition of Claim 3, wherein the cyclic structure of the hydrocarbon group of X in the chemical formulas (4) to (6) has an aromatic ring structure.

5. The antifouling coating composition of Claim 3 or 4, wherein the cyclic structure of the hydrocarbon group of X in the chemical formulas (4) to (6) has an aliphatic six-membered ring structure.

6. The antifouling coating composition of any one of Claims 3 to 5, wherein the cyclic structure of the hydrocarbon group of X in the chemical formulas (4) to (6) has a heteroatom-containing cyclic structure.

7. The antifouling coating composition of Claim 2, wherein the hydrocarbon group of X in the chemical formulas (4) to (6) is linear or branched.

8. The antifouling coating composition of Claim 1, wherein the ester compound C comprises an ester compound represented by the chemical formulas (7) to (8).

9. The antifouling coating composition of Claim 8, wherein the hydrocarbon group of X in the chemical formulas (7) to (8) has a cyclic structure.

10. The antifouling coating composition of Claim 9, wherein the cyclic structure of the hydrocarbon group of X in the chemical formulas (7) to (8) has at least one of an aromatic ring structure, an aliphatic six-membered ring structure, and a heteroatom-containing cyclic structure.

11. The antifouling coating composition of Claim 8, wherein the hydrocarbon group of X in the chemical formulas (7) to (8) is linear or branched.

12. The antifouling coating composition of any one of Claims 8 to 11, wherein the hydrocarbon group of X in the chemical formulas (7) to (8) has a heteroatom.

13. A coated article comprising, on a surface thereof, an antifouling coating film formed using the antifouling coating composition of any one of Claims 1 to 12.
